(19) Europäisches Patentamt / European Patent Office / Office européen des brevets

(11) **EP 4 415 398 A1**

(12) **EUROPEAN PATENT APPLICATION**
published in accordance with Art. 153(4) EPC

(43) Date of publication:
**14.08.2024 Bulletin 2024/33**

(21) Application number: **22878935.0**

(22) Date of filing: **06.10.2022**

(51) International Patent Classification (IPC):
*H04W 4/40* (2018.01)       *H04W 4/80* (2018.01)
*H04W 92/18* (2009.01)       *H04W 4/029* (2018.01)
*H04W 4/02* (2018.01)       *H04W 4/024* (2018.01)
*H04W 12/069* (2021.01)

(52) Cooperative Patent Classification (CPC):
**H04W 4/02; H04W 4/024; H04W 4/029;
H04W 4/40; H04W 4/80; H04W 12/069;
H04W 92/18**

(86) International application number:
**PCT/KR2022/015065**

(87) International publication number:
**WO 2023/059114 (13.04.2023 Gazette 2023/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.10.2021 KR 20210132378**

(71) Applicant: **LG Electronics Inc.**
**Yeongdeungpo-gu**
**Seoul 07336 (KR)**

(72) Inventors:
• **SEO, Hanbyul**
**Seoul 06772 (KR)**
• **KIM, Hakseong**
**Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND DEVICE FOR CARRYING OUT DEVICE-TO-DEVICE COMMUNICATION FOR MESSAGE PROCESSING**

(57)     Proposed are a method for carrying out wireless communication by a first device, and a device supporting the same. For example, on the basis of an interworking relationship between the first device and a second device not being established, the first device may transmit a first message, and reception of at least one of a second message or a third message may be omitted. For example, the first device may establish the interworking relationship between the first device and the second device. For example, on the basis of the interworking relationship being established, the first device may receive at least any of the second message or the third message.

**FIG. 23**

Transmitting a first message, based on that a connection between a first device and a second device is not established, wherein a reception of at least one of a second message or a third message is skipped — S2310

Establishing a connection between a first device and a second device — S2320

Receiving at least one of a second message or a third message, based on that a connection is established — S2330

**Description**

This disclosure relates to a wireless communication system.

BACKGROUND ART

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PCS interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

DISCLOSURE

TECHNICAL PROBLEM

For example, if V2X message is received, first device may perform confirmation operation for which message is valid based on authentication (For example, key, direct authentication) of V2X message. For example, short-range communication device may be vehicle, and V2X message may be required to be processed quickly and largely of in environment where density of vehicle is high such as city center. For example, device performing communication with short-range communication device may be supported V2X service only when it has processing capacity for preparing throughput/throughput rate of V2X message. Therefore, cost for implementing this processing capacity to device that performs communication with short-range communication device may be increased.

TECHNICAL SOLUTION

In an embodiment, a method for performing wireless communication by a first device is provided. For example, the first device may transmit a first message, based on that a connection between the first device and a second device is not established, wherein a reception of at least one of a second message or a third message is skipped. For example, the first device may establish the connection between the first device and the second device. For example, the first device may receive at least one of the second message or the third message, based on that the connection is established.

In an embodiment, the first device performing wireless communication may be provided. The first device comprising at least one memory storing instructions; at least one transceiver; and at least one processor connected to the at least one memory and the at least one transceiver, wherein the at least one processor is adapted to execute instructions to perform operations comprising: may transmit a first message, based on that a connection between the first device and a second device is not established, wherein a reception of at least one of a second message or a third message is skipped. For example, based on the instructions executed by the at least one processor, the first device may establish the connection between the first device and the second device. For example, based on the instructions executed by the at least one processor, the first device may receive at least one of the second message or the third message, based on that the connection is established.

In an embodiment, the apparatus configured for control the first device may be provided. The apparatus comprising at least one processor; and at least one memory connected to the at least one processor and storing instructions that, based on being executed by the at least one processor, cause the at least one processor to perform operations comprising: may transmit a first message, based on that a connection between the first device and a second device is not established, wherein a reception of at least one of a second message or a third message is skipped. For example, based on the instructions executed by the at least one processor, the first device may establish the connection between the first device and the second device. For example, based on the instructions executed by the at least one processor, the first device may receive at least one of the second message or the third message, based on that the connection is established.

In an embodiment, a non-transitory computer-readable storage medium storing instructions may be provided. The instructions, based on being executed by at least one processor, cause the at least one processor to perform operations comprising: the first device to transmit a first message, based on that a connection between the first device and a second device is not established, wherein a reception of at least one of a second message or a third message is skipped. For example, the instructions, based on being executed by at least one processor, cause the at least one processor to: the first device to establish the connection between the first device and the second device. For example, the instructions, based on being executed by at least one processor, cause the at least one processor to: the first device to receive at least one of the second message or the third message, based on that the connection is established.

In an embodiment, a method for performing wireless communication by a second device is proposed. For example, the second device may establish a connection between a first device and the second device. For example, wherein the first message is transmitted, based on that the connection between the first device and the second device is not established. For example, wherein a reception of at least one of a second message or a third message is skipped. For example, wherein at least one of the second message or the third message is received, based on that the connection is established.

In an embodiment, a second device performing wireless communication may be provided. The second device comprising at least one memory storing instructions; at least one transceiver; and at least one processor connected to the at least one memory and the at least one transceiver, wherein the at least one processor is adapted to execute instructions to perform operations comprising: may establish a connection between a first device and the second device, wherein the first message is transmitted, based on that the connection between the first device and the second device is not established. For example, wherein a reception of at least one of a second message or a third message is skipped. For example, wherein at least one of the second message or the third message is received, based on that the connection is established.

In an embodiment, the apparatus configured for control a second device may be provided. The apparatus comprising at least one processor; and at least one memory connected to the at least one processor and storing instructions that, based on being executed by the at least one processor, cause the at least one processor to perform operations comprising: may establish a connection between a first device and the second device. For example, wherein the first message is transmitted, based on that the connection between the first device and the second device is not established. For example, wherein a reception of at least one of a second message or a third message is skipped. For example, wherein at least one of the second message or the third message is received, based on that the connection is established.

In an embodiment, a non-transitory computer-readable storage medium storing instructions may be provided. The instructions, based on being executed by at least one processor, cause the at least one processor to perform operations comprising: the second device to establish a connection between a first device and the second device. For example, wherein the first message is transmitted, based on that the connection between the first device and the second device is not established. For example, wherein a reception of at least one of a second message or a third message is skipped. For example, wherein at least one of the second message or the third message is received, based on that the connection is established.

## EFFECTS OF THE DISCLOSURE

A UE can efficiently perform sidelink communication.

## BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.
FIG. 3 shows a structure of a radio frame of an NR, based on an embodiment of the present disclosure.
FIG. 4 shows a structure of a slot of an NR frame, based on an embodiment of the present disclosure.
FIG. 5 shows an example of a BWP, based on an embodiment of the present disclosure.
FIG. 6 shows a procedure of performing V2X or SL communication by a UE based on a transmission mode, based on an embodiment of the present disclosure.
FIG. 7 shows three cast types, based on an embodiment of the present disclosure.
FIG. 8 shows a synchronization source or synchronization reference of V2X, based on an embodiment of the present disclosure.
FIG. 9 shows an example of an architecture of a 5G system capable of positioning a UE having access to a next generation-radio access network (NG-RAN) or an E-UTRAN based on an embodiment of the present disclosure.

FIG. 10 shows an example of implementing a network for measuring a location of a UE based on an embodiment of the present disclosure.

FIG. 11 shows an example of a protocol layer used to support LTE positioning protocol (LPP) message transmission between an LMF and a UE based on an embodiment of the present disclosure.

FIG. 12 shows an example of a protocol layer used to support NR positioning protocol A (NRPPa) PDU transmission between an LMF and an NG-RAN node based on an embodiment of the present disclosure.

FIG. 13 is a drawing for explaining an OTDOA positioning method based on an embodiment of the present disclosure.

FIG. 14 is a drawing for explaining an example of method performing connection between long-range communication device and short-range communication, according to an embodiment of the present disclosure.

FIG. 15 is a drawing for explaining an example of method performing connection between long-range communication device and short-range communication, according to an embodiment of the present disclosure.

FIG. 16 is a drawing showing an example of distributed antenna system (DAS) and reference point of vehicle, according to an embodiment of the present disclosure.

FIG. 17 is a drawing for explaining an example of method performing connection between long-range communication device and short-range communication, according to an embodiment of the present disclosure.

FIG. 18 is a drawing for explaining an example of method performing connection between long-range communication device and short-range communication, according to an embodiment of the present disclosure.

FIG. 19 is a drawing for explaining an example of method performing connection between long-range communication device and short-range communication, according to an embodiment of the present disclosure.

FIG. 20 is a figure for explaining problem of method performing communication between devices for processing message an embodiment of the present disclosure.

FIG. 21 is a figure for explaining method performing communication between devices for processing message, according to an embodiment of the present disclosure.

FIG. 22 is a figure for explaining procedure processing communication between devices for processing message, according to an embodiment of the present disclosure.

FIG. 23 shows a method for performing wireless communication by a first device, based on an embodiment of the present disclosure.

FIG. 24 shows a method for performing wireless communication by a second device, based on an embodiment of the present disclosure.

FIG. 25 shows a communication system 1, based on an embodiment of the present disclosure.

FIG. 26 shows wireless devices, based on an embodiment of the present disclosure.

FIG. 27 shows a signal process circuit for a transmission signal, based on an embodiment of the present disclosure.

FIG. 28 shows another example of a wireless device, based on an embodiment of the present disclosure.

FIG. 29 shows a hand-held device, based on an embodiment of the present disclosure.

FIG. 30 shows a vehicle or an autonomous vehicle, based on an embodiment of the present disclosure.

## DESCRIPTION OF EXEMPLARY EMBODIMENTS

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

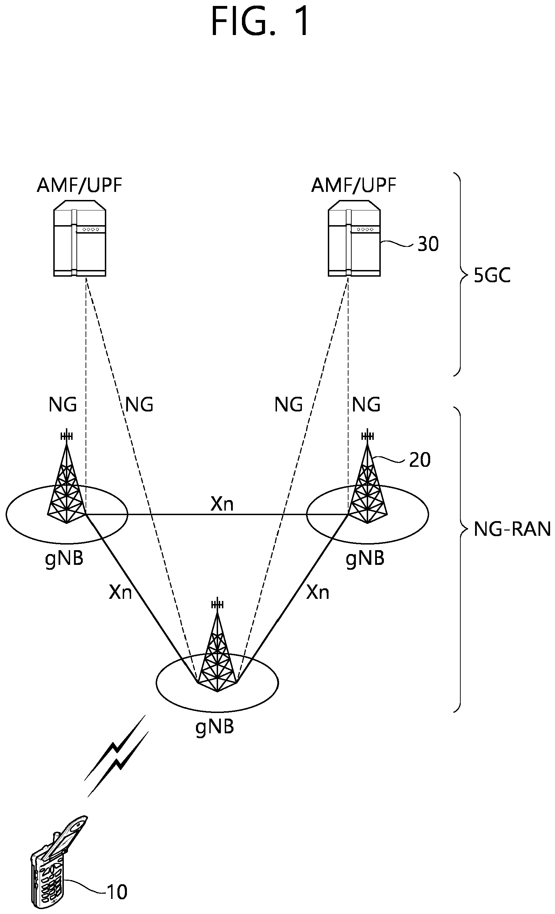

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

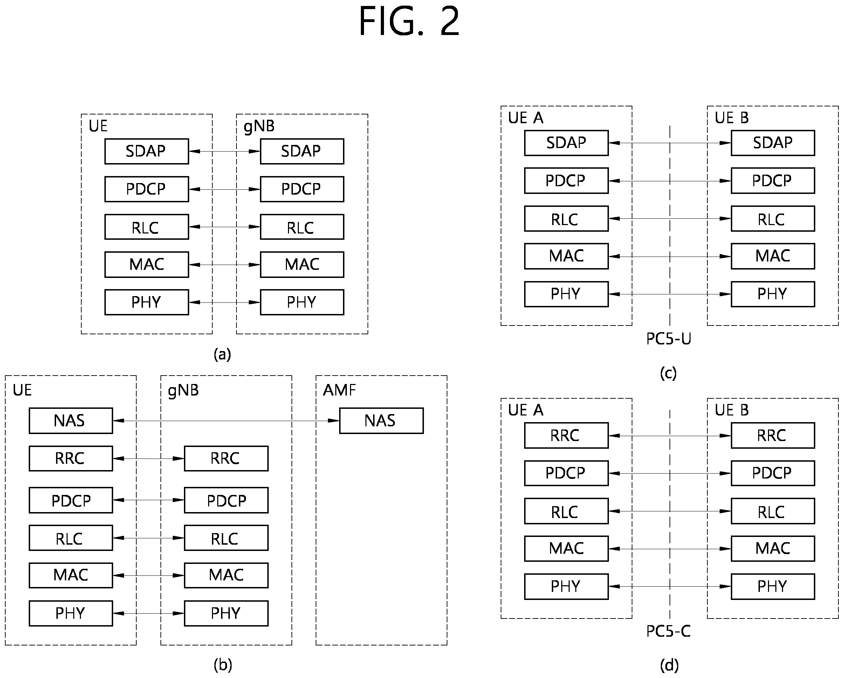

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication, (c) of FIG. 2 shows a radio protocol stack of a user plane for SL communication, and (d) of FIG. 2 shows a radio protocol stack of a control plane for SL communication.

Referring to FIG. 2, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

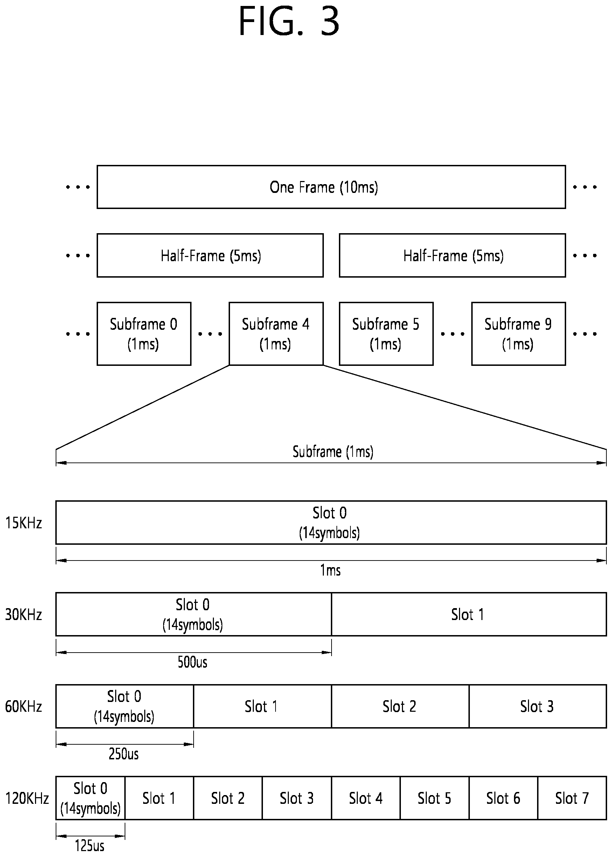

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot ($N^{slot}_{symb}$), a number slots per frame ($N^{frame,u}_{slot}$), and a number of slots per subframe ($N^{subframe,u}_{slot}$) based on an SCS configuration (u), in a case where a normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

[Table 2]

| SCS (15*2$^u$) | N$^{slot}_{symb}$ | N$^{frame,u}_{slot}$ | N$^{subframe,u}_{slot}$ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

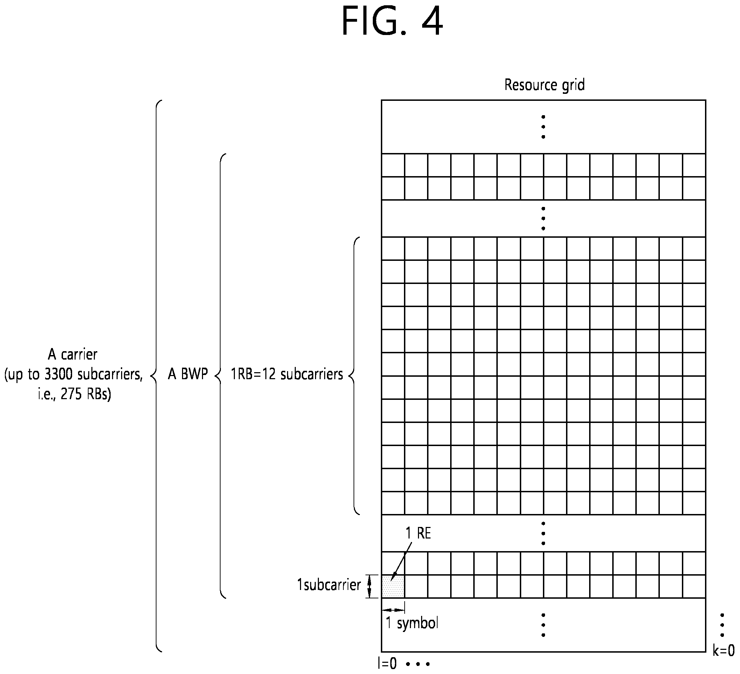

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

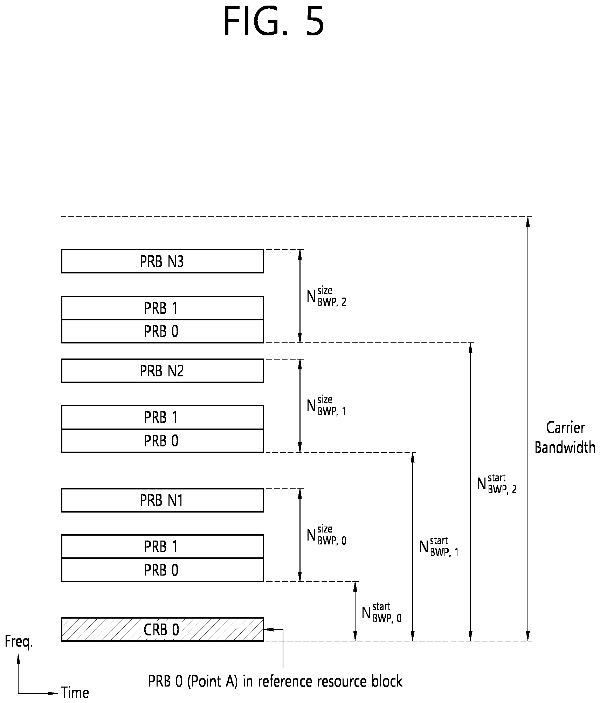

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

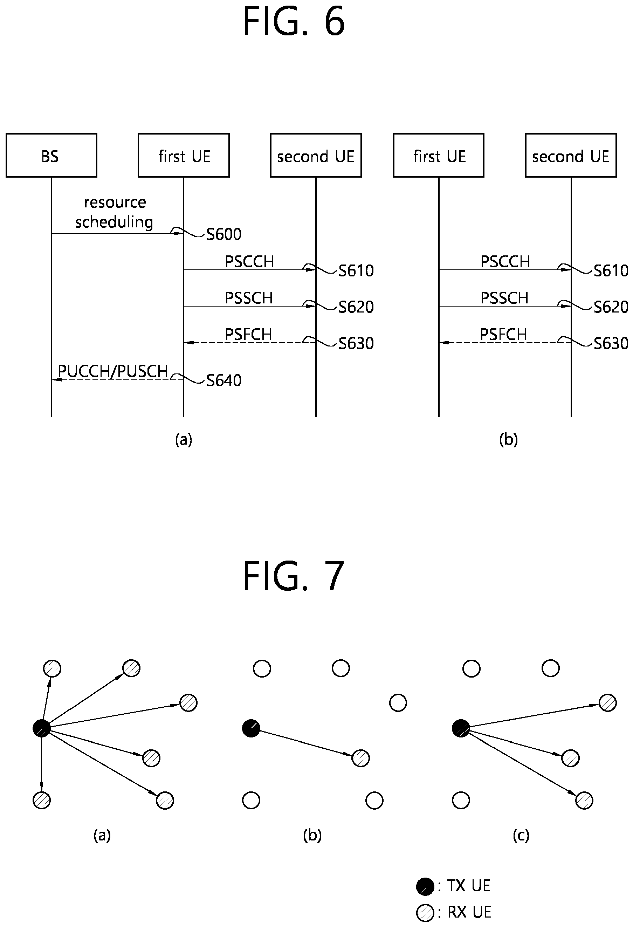

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1st-stage SCI) to a second UE based on the resource scheduling. In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI:

- Resource pool index - ceiling ($\log_2 I$) bits, where I is the number of resource pools for transmission configured by the higher layer parameter sl-TxPoolScheduling.
- Time gap - 3 bits determined by higher layer parameter sl-DCI-ToSL-Trans
- HARQ process number - 4 bits
- New data indicator - 1 bit
- Lowest index of the subchannel allocation to the initial transmission - ceiling ($\log_2(N^{SL}_{subChannel})$) bits
- SCI format 1-A fields: frequency resource assignment, time resource assignment
- PSFCH-to-HARQ feedback timing indicator - ceiling ($\log_2 N_{fb\_timing}$) bits, where $N_{fb\_timing}$ is the number of entries in the higher layer parameter sl-PSFCH-ToPUCCH.
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with pdsch-HARQ-ACK-Codebook = dynamic, 2 bits if the UE is configured with pdsch-HARQ-ACK-Codebook = semi-static
- Padding bits, if required

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1st-stage SCI) to a second UE by using the resource(s). In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling $(\log_2(N^{SL}_{subChannel}(N^{SL}_{subChannel}+1)/2))$ bits when the value of the higher layer parameter sl-MaxNumPerReserve is configured to 2; otherwise ceiling $\log_2(N^{SL}_{subChannel}(N^{SL}_{subChannel}+1)(2N^{SL}_{subChannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling $(\log_2 N_{rsv\_period})$ bits, where $N_{rsv\_period}$ is the number of entries in the higher layer parameter sl-ResourceReservePeriodList, if higher layer parameter sl-MultiReserveResource is configured; 0 bit otherwise
- DMRS pattern - ceiling $(\log_2 N_{pattern})$ bits, where $N_{pattern}$ is the number of DMRS patterns configured by higher layer parameter sl-PSSCH-DMRS-TimePatternList
- 2nd-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

[Table 5]

| Value of 2nd-stage SCI format field | 2nd-stage SCI format |
| --- | --- |
| 00 | SCI format 2-A |
| 01 | SCI format 2-B |
| 10 | Reserved |
| 11 | Reserved |

[Table 6]

| Value of the Number of DMRS port field | Antenna ports |
| --- | --- |
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

[Table 7]

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 6, in step S630, the first UE may receive the PSFCH. For example, the first UE and the second UE may determine a PSFCH resource, and the second UE may transmit HARQ feedback to the first UE using the PSFCH resource.

Referring to (a) of FIG. 6, in step S640, the first UE may transmit SL HARQ feedback to the base station through the PUCCH and/or the PUSCH.

FIG. 7 shows three cast types, based on an embodiment of the present disclosure. The embodiment of FIG. 7 may be combined with various embodiments of the present disclosure. Specifically, (a) of FIG. 7 shows broadcast-type SL communication, (b) of FIG. 7 shows unicast type-SL communication, and (c) of FIG. 7 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, a hybrid automatic repeat request (HARQ) procedure will be described.

For example, the SL HARQ feedback may be enabled for unicast. In this case, in a non-code block group (non-CBG) operation, if the receiving UE decodes a PSCCH of which a target is the receiving UE and if the receiving UE successfully decodes a transport block related to the PSCCH, the receiving UE may generate HARQ-ACK. In addition, the receiving UE may transmit the HARQ-ACK to the transmitting UE. Otherwise, if the receiving UE cannot successfully decode the transport block after decoding the PSCCH of which the target is the receiving UE, the receiving UE may generate the HARQ-NACK. In addition, the receiving UE may transmit HARQ-NACK to the transmitting UE.

For example, the SL HARQ feedback may be enabled for groupcast. For example, in the non-CBG operation, two HARQ feedback options may be supported for groupcast.

(1) Groupcast option 1: After the receiving UE decodes the PSCCH of which the target is the receiving UE, if the receiving UE fails in decoding of a transport block related to the PSCCH, the receiving UE may transmit HARQ-NACK to the transmitting UE through a PSFCH. Otherwise, if the receiving UE decodes the PSCCH of which the target is the receiving UE and if the receiving UE successfully decodes the transport block related to the PSCCH, the receiving UE may not transmit the HARQ-ACK to the transmitting UE.

(2) Groupcast option 2: After the receiving UE decodes the PSCCH of which the target is the receiving UE, if the receiving UE fails in decoding of the transport block related to the PSCCH, the receiving UE may transmit HARQ-NACK to the transmitting UE through the PSFCH. In addition, if the receiving UE decodes the PSCCH of which the target is the receiving UE and if the receiving UE successfully decodes the transport block related to the PSCCH, the receiving UE may transmit the HARQ-ACK to the transmitting UE through the PSFCH.

For example, if the groupcast option 1 is used in the SL HARQ feedback, all UEs performing groupcast communication may share a PSFCH resource. For example, UEs belonging to the same group may transmit HARQ feedback by using the same PSFCH resource.

For example, if the groupcast option 2 is used in the SL HARQ feedback, each UE performing groupcast communication may use a different PSFCH resource for HARQ feedback transmission. For example, UEs belonging to the same group may transmit HARQ feedback by using different PSFCH resources.

In the present disclosure, HARQ-ACK may be referred to as ACK, ACK information, or positive-ACK information, and HARQ-NACK may be referred to as NACK, NACK information, or negative-ACK information.

Hereinafter, the Sidelink Synchronization Signal (SLSS) and synchronization information will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

Meanwhile, in NR SL system, a plurality of numerology having SCS and/or CP length that is different from each other may be supported. For example, as SCS is larger, as length of time resource where transmitting UE transmits S-SSB may be shorter. For example, coverage of S-SSB may be reduced. For example, to ensure coverage of S-SSB, transmitting UE may transmit, to receiving UE, one or more S-SSBs within a S-SSB transmission periodicity according to SCS. For example, the number of S-SSB that transmitting UE transmits within a S-SSB transmission periodicity may be preconfigured or configured to transmitting UE. For example, a S-SSB transmission periodicity may be 160ms. For example, for all SCS, a S-SSB transmission periodicity of 160ms may be supported.

For example, if SCS is 15kHz in FR1, transmitting UE may transmit, to receiving UE, one or two S-SSBs within a S-SSB transmission periodicity. For example, if SCS is 30kHz in FR1, transmitting UE may transmit, to receiving UE, one or two S-SSBs within a S-SSB transmission periodicity. For example, if SCS is 60kHz in FR1, transmitting UE may transmit, to receiving UE, one, two, or four S-SSBs within a S-SSB transmission periodicity.

For example, if SCS is 60kHz in FR2, transmitting UE may transmit, to receiving UE, one, two, four, eight, sixteen, or thirty two S-SSBs within a S-SSB transmission periodicity. For example, if SCS is 120kHz in FR2, transmitting UE may transmit, to receiving UE, one, two, four, eight, sixteen, thirty two, or sixty four S-SSBs within a S-SSB transmission periodicity.

Meanwhile, if SCS is 60kHz, CP of two type may be supported. For example, S-SSB structure that transmitting UE transmits to receiving UE may be different according to CP type. For example, the CP type may be Normal CP (NCP) or Extended CP (ECP). For example, if CP type is NCP, the number of symbols mapping PSBCH within S-SSB that transmitting UE transmits may be 9 or 8. For example, if CP type is ECP, the number of symbols mapping PSBCH within S-SSB that transmitting UE transmits may be 7 or 6. For example, PSBCH may be mapped to first symbol that is within S-SSB that transmitting UE transmits. For example, receiving UE that receives S-SSB may perform Automatic Gain Control (AGC) operation within first symbol interval of S-SSB.

For example, if CP type is ECP, the number of symbols mapping PSBCH after S-SSS within S-SSB may be 6. For example, coverage of S-SSB may be different according to whether CP type is NCP or ECP.

Meanwhile, each SLSS may have Sidelink Synchronization Identifier, SLSS ID.

For example, if LTE SL or LTE V2X, based on combination different 2 S-PSS sequences and different 168 S-SSS sequence, value of SLSS ID may be defined. For example, the number of SLSS ID may be 336. For example, value of SLSS ID may be one of 0 to 335.

For example, in NR SL or NR V2X, based on combination different 2 S-PSS sequences and different 336 S-SSS sequence, SLSS ID value may be defined. For example, the number of SLSS ID may be 336. For example, value of SLSS ID may be one of 0 to 335. For example, among two different S-PSS, one S-PSS may correspond to in-coverage, the other may corresponds to out-of-coverage. For example, SLSS ID of 0 to 335 may be used to in-coverage, SLSS ID of 336 to 671 may be used to out-of-coverage.

Meanwhile, to enhance S-SSB reception capability of the receiving UE, transmitting UE may need to optimize transmitting power according to characteristic of each signal that consists of S-SSB. For example, transmitting UE may determine Maximum Power Reduction (MPR) value for each signal that consists of S-SSB. For example, if PAPR value between S-PSS and S-SSS that consists of S-SSB is different to each other, to enhance S-SSB reception capability of the receiving UE, transmitting UE may apply optimal MPR value for each S-PSS and S-SSS transmission. For example, for transmitting UE to perform amplification operation for each signal, transient period may be applied. Transient period may preserve time needed for transmission amp of transmitting UE to perform normal operation in boundary where transmission power of UE is differ. For example, in case of FR1, this transient period may be 10us. For example, in case of FR2, this transient period may be 5us. For example, search window for receiving UE to detect S-PSS may be 80ms and/or 160ms.

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

Hereinafter, synchronization acquisition of a SL UE will be described.

In time division multiple access (TDMA) and frequency division multiple access (FDMA) systems, accurate time and frequency synchronization is essential. If the time and frequency synchronization is not accurate, system performance may be degraded due to inter symbol interference (ISI) and inter carrier interference (ICI). The same is true for V2X. In V2X, for time/frequency synchronization, sidelink synchronization signal (SLSS) may be used in a physical layer, and master information block-sidelink-V2X (MIB-SL-V2X) may be used in a radio link control (RLC) layer.

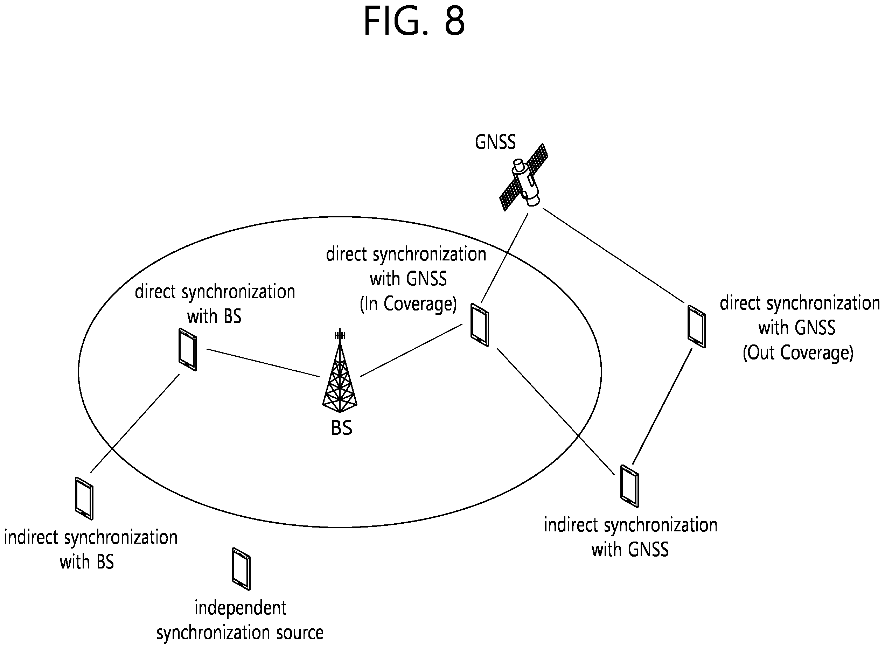

FIG. 8 shows a synchronization source or synchronization reference of V2X, based on an embodiment of the present disclosure. The embodiment of FIG. 8 may be combined with various embodiments of the present disclosure.

Referring to FIG. 8, in V2X, a UE may be directly synchronized with a global navigation satellite system (GNSS), or may be indirectly synchronized with the GNSS through a UE (inside network coverage or outside network coverage) directly synchronized with the GNSS. If the GNSS is configured as the synchronization source, the UE may calculate a DFN and a subframe number by using a coordinated universal time (UTC) and a (pre-)configured direct frame number (DFN) offset.

Alternatively, the UE may be directly synchronized with a BS, or may be synchronized with another UE which is time/frequency-synchronized with the BS. For example, the BS may be an eNB or a gNB. For example, if the UE is inside the network coverage, the UE may receive synchronization information provided by the BS, and may be directly synchronized with the BS. Thereafter, the UE may provide the synchronization information to adjacent another UE. If BS timing is configured based on synchronization, for synchronization and downlink measurement, the UE may be dependent on a cell related to a corresponding frequency (when it is inside the cell coverage at the frequency), or a primary cell or a serving cell (when it is outside the cell coverage at the frequency).

The BS (e.g., serving cell) may provide a synchronization configuration for a carrier used in V2X or SL communication. In this case, the UE may conform to the synchronization configuration received from the BS. If the UE fails to detect any cell in a carrier used in the V2X or SL communication and fails to receive the synchronization configuration from the serving cell, the UE may conform to a pre-configured synchronization configuration.

Alternatively, the UE may be synchronized with another UE which fails to obtain synchronization information directly or indirectly from the BS or the GNSS. A synchronization source or preference may be pre-configured to the UE. Alternatively, the synchronization source and preference may be configured through a control message provided by the BS.

An SL synchronization source may be associated/related with a synchronization priority. For example, a relation between the synchronization source and the synchronization priority may be defined as shown in Table 8 or Table 9.

Table 8 or Table 9 are for exemplary purposes only, and the relation between the synchronization source and the synchronization priority may be defined in various forms.

[Table 8]

| Priority level | GNSS-based synchronization | eNB/gNB-based synchronization |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with BS |
| P3 | All other UEs | GNSS |
| P4 | N/A | All UEs directly synchronized with GNSS |
| P5 | N/A | All UEs indirectly synchronized with GNSS |
| P6 | N/A | All other UEs |

[Table 9]

| Priority level | GNSS-based synchronization | eNB/gNB-based synchronization |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with BS |
| P3 | BS | GNSS |
| P4 | All UEs directly synchronized with BS | All UEs directly synchronized with GNSS |
| P5 | All UEs indirectly synchronized with BS | All UEs indirectly synchronized with GNSS |
| P6 | Remaining UE(s) having low priority | Remaining UE(s) having low priority |

In Table 8 or Table 9, P0 may denote a highest priority, and P6 may denote a lowest priority. In Table 8 or Table 9, the BS may include at least one of a gNB and an eNB.

Whether to use GNSS-based synchronization or BS-based synchronization may be (pre-)configured. In a single-carrier operation, the UE may derive transmission timing of the UE from an available synchronization reference having the highest priority.

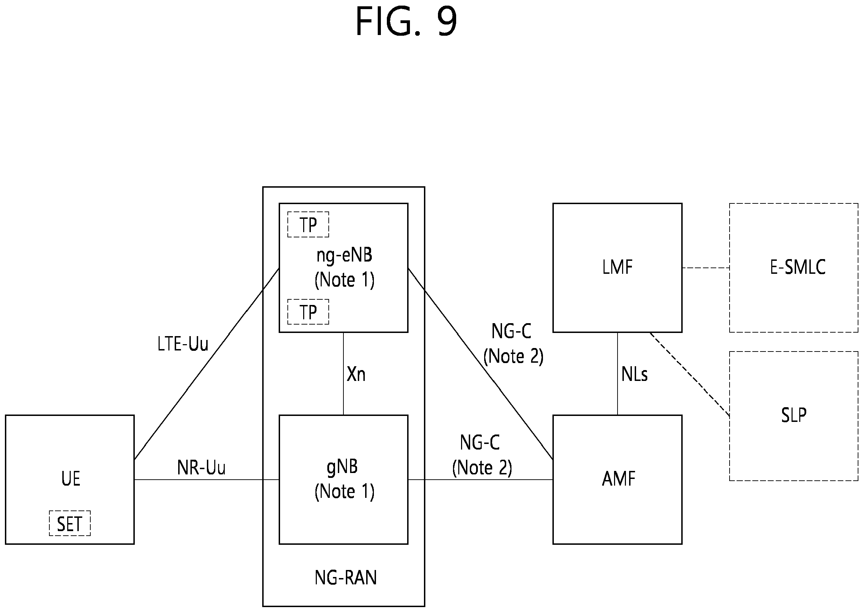

FIG. 9 shows an example of an architecture of a 5G system capable of positioning a UE having access to a next generation-radio access network (NG-RAN) or an E-UTRAN based on an embodiment of the present disclosure. The embodiment of FIG. 9 may be combined with various embodiments of the present disclosure.

Referring to FIG. 9, an AMF may receive a request for a location service related to a specific target UE from a different entity such as a gateway mobile location center (GMLC), or may determine to start the location service in the AMF itself instead of the specific target UE. Then, the AMF may transmit a location service request to a location management function (LMF). Upon receiving the location service request, the LMF may process the location service request and return a processing request including an estimated location or the like of the UE to the AMF. Meanwhile, if the location service request is received from the different entity such as GMLC other than the AMF, the AMF may transfer to the different entity the processing request received from the LMF.

A new generation evolved-NB (ng-eNB) and a gNB are network elements of NG-RAN capable of providing a measurement result for location estimation, and may measure a radio signal for a target UE and may transfer a resultant value to the LMF. In addition, the ng-eNB may control several transmission points (TPs) such as remote radio heads or PRS-dedicated TPs supporting a positioning reference signal (PRS)-based beacon system for E-UTRA.

The LMF may be connected to an enhanced serving mobile location centre (E-SMLC), and the E-SMLC may allow the LMF to access E-UTRAN. For example, the E-SMLC may allow the LMF to support observed time difference of arrival (OTDOA), which is one of positioning methods of E-UTRAN, by using downlink measurement obtained by a target UE through a signal transmitted from the gNB and/or the PRS-dedicated TPs in the E-UTRAN.

Meanwhile, the LMF may be connected to an SUPL location platform (SLP). The LMF may support and manage different location determining services for respective target UEs. The LMF may interact with a serving ng-eNB or serving gNB for the target UE to obtain location measurement of the UE. For positioning of the target UE, the LMF may determine a positioning method based on a location service (LCS) client type, a requested quality of service (QoS), UE positioning capabilities, gNB positioning capabilities, and ng-eNB positioning capabilities, or the like, and may apply such a positioning method to the serving gNB and/or the serving ng-eNB. In addition, the LMF may determine additional information such as a location estimation value for the target UE and accuracy of location estimation and speed. The SLP is a secure user plane location (SUPL) entity in charge of positioning through a user plane.

The UE may measure a downlink signal through NG-RAN, E-UTRAN, and/or other sources such as different global navigation satellite system (GNSS) and terrestrial beacon system (TBS), wireless local access network (WLAN) access points, Bluetooth beacons, UE barometric pressure sensors or the like. The UE may include an LCS application. The UE may communicate with a network to which the UE has access, or may access the LCS application through another application included in the UE. The LCS application may include a measurement and calculation function required to determine a location of the UE. For example, the UE may include an independent positioning function such as a global positioning system (GPS), and may report the location of the UE independent of NG-RAN transmission. Positioning information obtained independently as such may be utilized as assistance information of the positioning information obtained from the network.

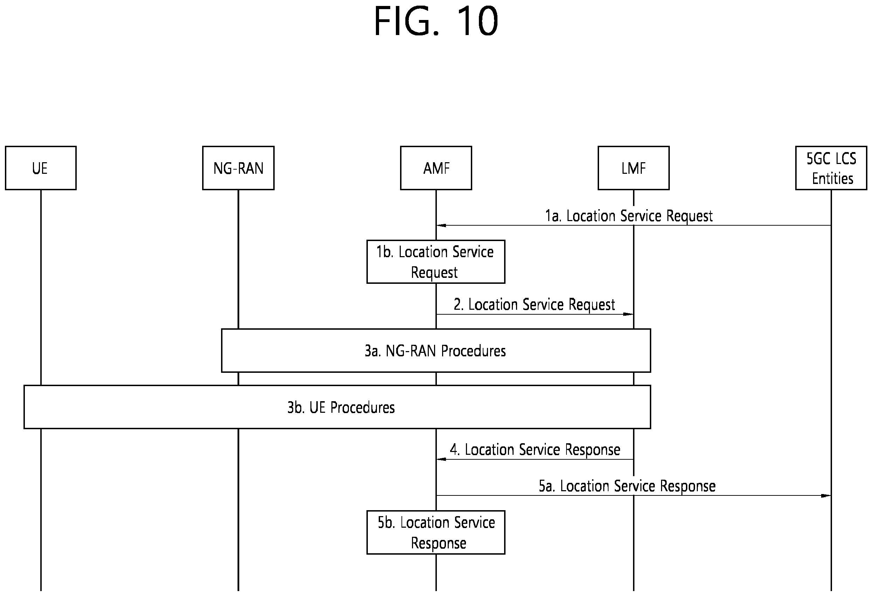

FIG. 10 shows an example of implementing a network for measuring a location of a UE based on an embodiment of the present disclosure. The embodiment of FIG. 10 may be combined with various embodiments of the present disclosure.

When the UE is in a connection management (CM)-IDLE state, if an AMF receives a location service request, the AMF may establish a signaling connection with the UE, and may request for a network trigger service to allocate a specific serving gNB or ng-eNB. Such an operational process is omitted in FIG. 10. That is, it may be assumed in FIG. 10 that the UE is in a connected mode. However, due to signaling and data inactivation or the like, the signaling connection may be released by NG-RAN while a positioning process is performed.

A network operation process for measuring a location of a UE will be described in detail with reference to FIG. 10. In step a1, a 5GC entity such as GMLC may request a serving AMF to provide a location service for measuring a location of a target UE. However, even if the GMLC does not request for the location service, based on step 1b, the serving AMF may determine that the location service for measuring the location of the target UE is required. For example, to measure the location of the UE for an emergency call, the serving AMF may determine to directly perform the location service.

Thereafter, the AMF may transmit the location service request to an LMF based on step 2, and the LMF may start location procedures to obtain location measurement data or location measurement assistance data together with a serving ng-eNB and a serving gNB. Additionally, based on step 3b, the LMF may start location procedures for downlink positioning together with the UE. For example, the LMF may transmit assistance data defined in 3GPP TS 36.355, or may obtain a location estimation value or a location measurement value. Meanwhile, step 3b may be performed additionally after step 3a is performed, or may be performed instead of step 3a.

In step 4, the LMF may provide a location service response to the AMF. In addition, the location service response may include information on whether location estimation of the UE is successful and a location estimation value of the UE. Thereafter, if the procedure of FIG. 10 is initiated by step a1, the AMF may transfer the location service response to a 5GC entity such as GMLC, and if the procedure of FIG. 10 is initiated by step 1b, the AMF may use the location service response to provide a location service related to an emergency call or the like.

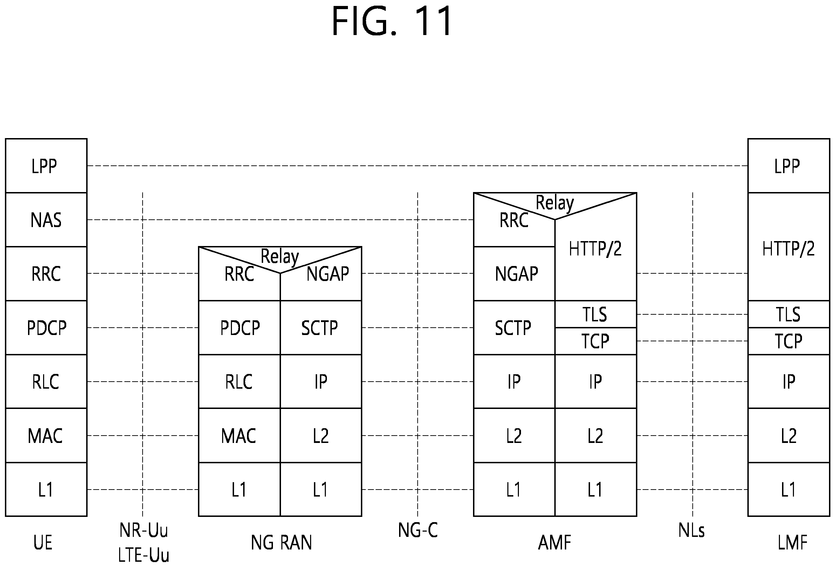

FIG. 11 shows an example of a protocol layer used to support LTE positioning protocol (LPP) message transmission between an LMF and a UE based on an embodiment of the present disclosure. The embodiment of FIG. 11 may be combined with various embodiments of the present disclosure.

An LPP PDU may be transmitted through a NAS PDU between an AMF and the UE. Referring to FIG. 11, an LPP may be terminated between a target device (e.g., a UE in a control plane or an SUPL enabled terminal (SET) in a user plane) and a location server (e.g., an LMF in the control plane and an SLP in the user plane). The LPP message may be transferred in a form of a transparent PDU through an intermediary network interface by using a proper protocol such as an NG application protocol (NGAP) through an NG-control plane (NG-C) interface and NAS/RRC or the like through an NR-Uu interface. The LPP protocol may enable positioning for NR and LTE by using various positioning methods.

For example, based on the LPP protocol, the target device and the location server may exchange mutual capability information, assistance data for positioning, and/or location information. In addition, an LPP message may be used to indicate exchange of error information and/or interruption of the LPP procedure.

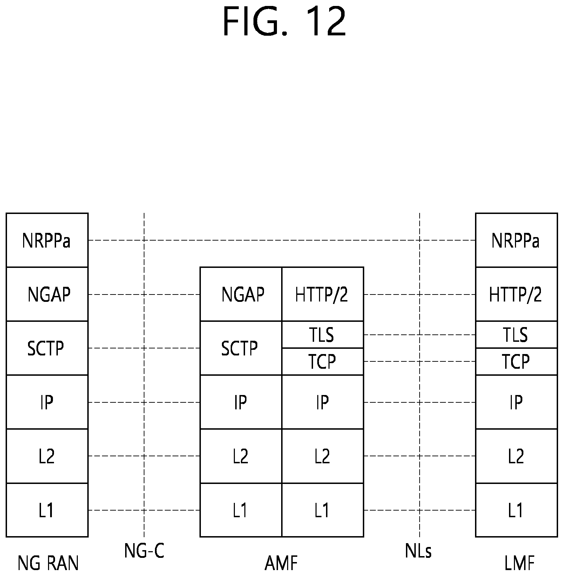

FIG. 12 shows an example of a protocol layer used to support NR positioning protocol A (NRPPa) PDU transmission between an LMF and an NG-RAN node based on an embodiment of the present disclosure. The embodiment of FIG. 12 may be combined with various embodiments of the present disclosure.

The NRPPa may be used for information exchange between the NG-RAN node and the LMF. Specifically, the NRPPa may exchange an enhanced-cell ID (E-CID) for measurement, data for supporting an OTDOA positioning method, and a cell-ID, cell location ID, or the like for an NR cell ID positioning method, transmitted from the ng-eNB to the LMF.

Even if there is no information on an associated NRPPa transaction, the AMF may route NRPPa PDUs based on a routing ID of an associated LMR through an NG-C interface.

A procedure of an NRPPa protocol for location and data collection may be classified into two types. A first type is a UE associated procedure for transferring information on a specific UE (e.g., location measurement information or the like), and a second type is a non UE associated procedure for transferring information (e.g., gNB/ng-eNB/TP timing information, etc.) applicable to an NG-RAN node and associated TPs. The two types of the procedure may be independently supported or may be simultaneously supported.

Meanwhile, examples of positioning methods supported in NG-RAN may include GNSS, OTDOA, enhanced cell ID (E-CID), barometric pressure sensor positioning, WLAN positioning, Bluetooth positioning and terrestrial beacon system (TBS), uplink time difference of arrival (UTDOA), etc.

(1) OTDOA (Observed Time Difference Of Arrival)

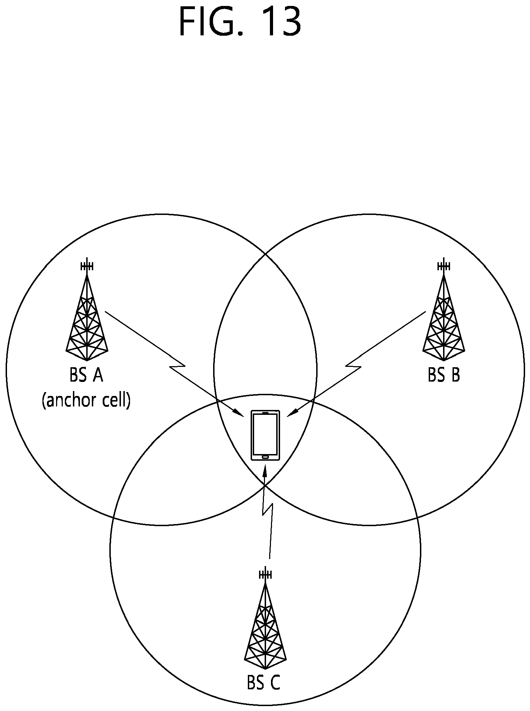

FIG. 13 is a drawing for explaining an OTDOA positioning method based on an embodiment of the present disclosure. The embodiment of FIG. 13 may be combined with various embodiments of the present disclosure.

The OTDOA positioning method uses measurement timing of downlink signals received by a UE from an eNB, an ng-eNB, and a plurality of TPs including a PRS-dedicated TP. The UE measures timing of downlink signals received by using location assistance data received from a location server. In addition, a location of the UE may be determined based on such a measurement result and geometric coordinates of neighboring TPs.

A UE connected to a gNB may request for a measurement gap for OTDOA measurement from the TP. If the UE cannot recognize a single frequency network (SFN) for at least one TP in the OTDOA assistance data, the UE may use an autonomous gap to obtain an SNF of an OTDOA reference cell before the measurement gap is requested to perform reference signal time difference (RSTD) measurement.

Herein, the RSTD may be defined based on a smallest relative time difference between boundaries of two subframes received respectively from a reference cell and a measurement cell. That is, the RSTD may be calculated based on a relative time difference between a start time of a subframe received from the measurement cell and a start time of a subframe of a reference cell closest to the start time of the subframe received from the measurement cell. Meanwhile, the reference cell may be selected by the UE.

For correct OTDOA measurement, it may be necessary to measure a time of arrival (TOA) of a signal received from three or more TPs or BSs geometrically distributed. For example, a TOA may be measured for each of a TP1, a TP2, and a TP3, and RSTD for TP 1-TP 2, RSTD for TP 2-TP 3, and RSTD for TP 3-TP 1 may be calculated for the three TOAs. Based on this, a geometric hyperbola may be determined, and a point at which these hyperbolas intersect may be estimated as a location of a UE. In this case, since accuracy and/or uncertainty for each TOA measurement may be present, the estimated location of the UE may be known as a specific range based on measurement uncertainty.

For example, RSTD for two TPs may be calculated based on Equation 1.

[Equation 1]

$$RSTDi,1 = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

Herein, c may be the speed of light, {xt, yt} may be a (unknown) coordinate of a target UE, {xi, yi} may be a coordinate of a (known) TP, and {x1, y1} may be a coordinate of a reference TP (or another TP). Herein, (Ti-T1) may be referred to as "real time differences (RTDs)" as a transmission time offset between two TPs, and ni, n1 may represent values related to UE TOA measurement errors.

(2) E-CID (Enhanced Cell ID)

In a cell ID (CID) positioning method, a location of a UE may be measured through geometric information of a serving ng-eNB, serving gNB, and/or serving cell of the UE. For example, the geometric information of the serving ng-eNB, serving gNB, and/or serving cell may be obtained through paging, registration, or the like.

Meanwhile, in addition to the CID positioning method, an E-CID positioning method may use additional UE measurement and/or NG-RAN radio resources or the like to improve a UE location estimation value. In the E-CID positioning method, although some of the measurement methods which are the same as those used in a measurement control system of an RRC protocol may be used, additional measurement is not performed in general only for location measurement of the UE. In other words, a measurement configuration or a measurement control message may not be provided additionally to measure the location of the UE. Also, the UE may not expect that an additional measurement operation only for location measurement will be requested, and may report a measurement value obtained through measurement methods in that the UE can perform measurement in a general manner.

For example, the serving gNB may use an E-UTRA measurement value provided from the UE to implement the E-CID positioning method.

Examples of a measurement element that can be used for E-CID positioning may be as follows.

- UE measurement: E-UTRA reference signal received power (RSRP), E-UTRA reference signal received quality (RSRQ), UE E-UTRA Rx-Tx Time difference, GSM EDGE random access network (GERAN)/WLAN reference signal strength indication (RSSI), UTRAN common pilot channel (CPICH) received signal code power (RSCP), UTRAN CPICH Ec/Io
- E-UTRAN measurement: ng-eNB Rx-Tx Time difference, timing advance (TADV), angle of arrival (AoA)

Herein, the TADV may be classified into Type 1 and Type 2 as follows.

$$\text{TADV Type 1} = (\text{ng-eNB Rx-Tx time difference}) + (\text{UE E-UTRA Rx-Tx time difference})$$

$$\text{TADV Type 2} = \text{ng-eNB Rx-Tx time difference}$$

Meanwhile, AoA may be used to measure a direction of the UE. The AoA may be defined as an estimation angle with respect to the location of the UE counterclockwise from a BS/TP. In this case, a geographic reference direction may be north. The BS/TP may use an uplink signal such as a sounding reference signal (SRS) and/or a demodulation reference signal (DMRS) for AoA measurement. In addition, the larger the arrangement of the antenna array, the higher the measurement accuracy of the AoA. When the antenna arrays are arranged with the same interval, signals received from adjacent antenna elements may have a constant phase-rotate.

(3) UTDOA (Uplink Time Difference of Arrival)

UTDOA is a method of determining a location of a UE by estimating an arrival time of SRS. When calculating an estimated SRS arrival time, the location of the UE may be estimated through an arrival time difference with respect to another cell (or B S/TP) by using a serving cell as a reference cell. In order to implement the UTDOA, E-SMLC may indicate a serving cell of a target UE to indicate SRS transmission to the target UE. In addition, the E-SMLC may provide a configuration such as whether the SRS is periodical/aperiodical, a bandwidth, frequency/group/sequence hopping, or the like.

According to an embodiment of the present disclosure, for supporting V2X service in vehicle that is not car, such as bicycle or motorcycle, kickboard, electric wheelchair, or the like, to construct short range communication device based on LTE/NR sidelink or IEEE802. 1 1p/bd may be necessary. However, for example, in such V2X service device, there may be a problem that implementation cost of V2X service device is increased due to constructing long range communication device in charge of communicating with base station and processing functionality and user interface required for providing other V2X service in together.

In the present disclosure, connection scheme between long-range communication supporting device such as smartphone and short-range communication supporting device that can be installed/attached to vehicle such as car or bicycle may be proposed. Here, for example, long-range communication may mean that UE transmit and receive signal with base station by using uplink and downlink while communicating with other UE or server. For example, Short-range communication may mean operation that UE transmit and receive information by using inter-UE direct communication such as sidelink.

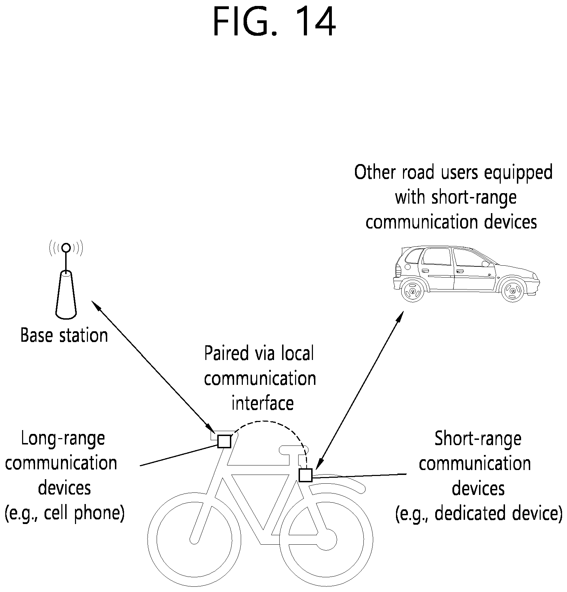

FIG. 14 is a drawing for explaining an example of method performing connection between long-range communication device and short-range communication, according to an embodiment of the present disclosure. The embodiment of FIG. 14 may be combined with various embodiments of the present disclosure.

Referring to FIG. 14, an embodiment of the present disclosure, for example, smartphone may already have functionality of long-range communication. However, for example, short-range communication may be also required for providing V2X service regardless of coverage of base station, for example, additional hardware equipping for supporting it in general smartphone may be required. Meanwhile, for example, short-range communication for V2X service may only be needed when using vehicle such as car or bicycle, for example, instead of adding another hardware to long-range communication device, utilizing by installing device supporting short-range communication by lower price to this mobility device may be effective. For example, it may be effective that maximizing utilizing connection with long-range communication device and functionality of long-range communication to reduce price of the installed short-range communication device. FIG. 14 shows a case that this structure is applied in bicycle.

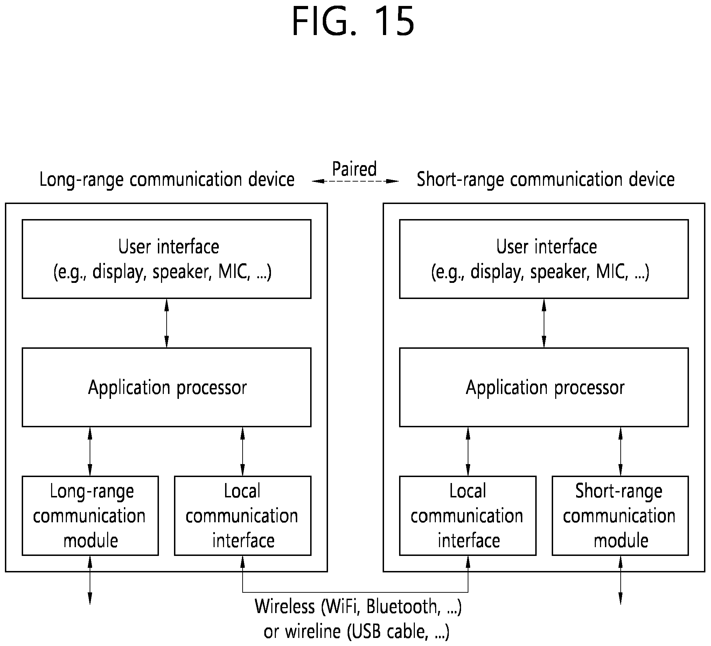

FIG. 15 is a drawing for explaining an example of method performing connection between long-range communication device and short-range communication, according to an embodiment of the present disclosure. The embodiment of FIG. 15 may be combined with various embodiments of the present disclosure.

Referring to FIG. 15, for example, each device may have each communication module, and also may have application processor performing basic processing for receiving data by that module. Furthermore, for example, two device may have connection via local communication interface, wireless, such as WiFi or Bluetooth or wired, such as US cable. In FIG. 15, it is considered that user interface is commonly used by long-range communication device, for example, it may also be possible, short-range communication device, transferring information to user or receiving information input from user with having user interface.

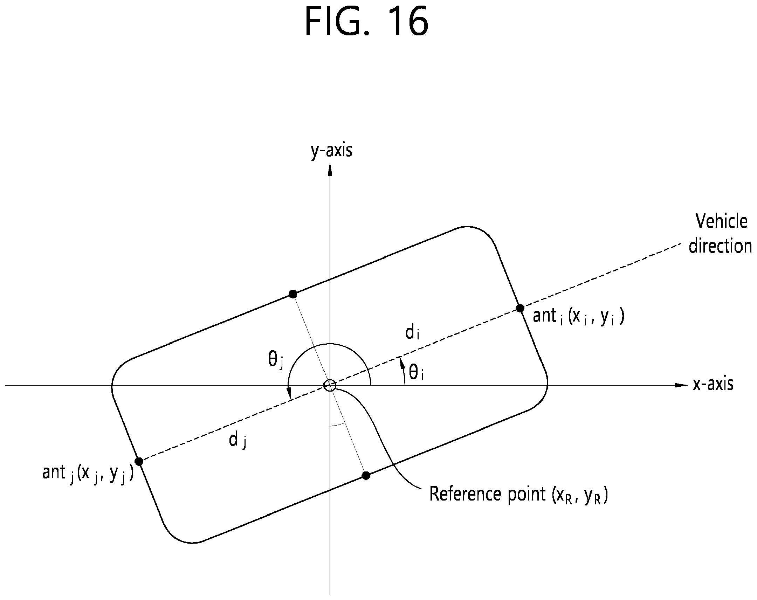

In an embodiment of the present disclosure, for example, long-range device like smartphone may generally have GNSS signal receiving and processing device. Meanwhile, for example, short-range communication device may also require GNSS signal receiving and processing device, for example, to perform LTE and NR sidelink communication using GNSS as synchronization reference, at a minimum. Therefore, for example, as shown in FIG. 14, when two devices are connected, two devices capable of performing positioning via GNSS may operate simultaneously. For example, more precise location may be obtained by sharing GNSS signal received from two devices or location information measured from two devices, or by combining them. For example, by simple combining, operation of averaging GNSS signals received from each device or averaging locations calculated from each device may be possible. For example, for more precise combining, by pre-identifying location of two devices (For example, relative location (For example, distance, angle) between short-range communication device installed in car or bicycle and location that long-range device to be connected will be mounted may be pre-inserted), for example, by identifying relative location via reception or transmission between two devices such as Bluetooth, WiFi signal, final location of vehicle based on location calculated by each device may be calculated. For example, as an example of method calculating final mobility location, based on location measured in different device of one vehicle, as shown in FIG. 16 and described in the embodiment below, method that combines positioning result from each antenna installed at a plurality of locations may be considered.

FIG. 16 is a drawing showing an example of distributed antenna system (DAS) and reference point of vehicle, according to an embodiment of the present disclosure.

The goal of antenna distribution technology is to enhance positioning performance like accuracy, reliability, and availability by utilizing DAS. As explained below, by appropriately combining measurement of distribution antenna, accuracy and reliability of positioning may be enhanced.

In case of vehicle, vehicle may generally be displayed by using reference point (For example, center of vehicle) as the vehicle's own location, for example, it may be signalled in cooperative awareness message (CAM) message. After estimating each antenna location by TDOA method, estimated antenna location may be transformed into vehicle location by using geometry of DAS.

As shown in FIG. 16, let's assume that locations of two DAS antennas and reference point of vehicle are in vehicle. Reference point of vehicle is defined as a center of vehicle and two antennas are located in a straight line. Distance between two antennas is d and each antenna uniformly sepeprated from reference point by d/2. Therefore, reference point (xCi, yCi) that is transformed from ith antenna location (xi, yi) is obtained by following equation 2. For example, θi is an angle formed between direction of the ith antenna and coordinate direction at reference point.

[Equation 2]

$$(x_{Ci}, y_{Ci}) = (x_i, y_i) - \left(\frac{d}{2}\cos(\theta_i), \frac{d}{2}\sin(\theta_i)\right),$$

As explained above, location of vehicle may be independently estimated from location of each antenna of DAS. To enhance accuracy of vehicle positioning, vehicle location estimated from each antenna may be combined together. One of the solution may be to apply weight based on reliability of each estimate, that may be determined according to quality of receiving signal or the number of RSU/gNB that is used for antenna positioning. Example is same as following equation 3. For example, xC,yC is a location of final estimated vehicle, xC1,yC1 and xC2,yC2 are locations of vehicle estimated by using antenna#1 and antenna#2, respectively, and $0 \le \beta \le 1$ is weight factor.

[Equation 3]

$$(x_C, y_C) = \beta(x_{C1}, y_{C1}) + (1 - \beta)(x_{C2}, y_{C2}),$$

For example, location information of vehicle that is calculated according to an embodiment of the present disclosure may be transmitted included in V2X message generated by vehicle.

In an embodiment of the present disclosure, for example, vehicle may transmit information for its velocity, acceleration, or direction of travel by adding its location information to V2X message that is generated by itself, it may be to estimate future movement of corresponding vehicle and may be to help determination for whether there will be a collision. For example, information for velocity, acceleration, or direction of travel may be calculated based on how location information changes over time, for example, location information via GNSS has relatively erroneous, such that velocity, acceleration, or direction of travel derived from this may also be relatively erroneous. For example, long-range communication like smartphone, with separate velocity and acceleration sensor and geo-sensor, may estimate velocity, acceleration, or direction of travel with relatively small error by not using GNSS. For example, if two devices are connected, long-range communication device may transfer, to short-range communication device, velocity, acceleration, or direction of travel obtained by a variety of sensors, for example, short-range communication device may operate to transmit this information as it is via short-range communication or to transmit value calculated by combining between it and self-identified information via short-range communication.

According to an embodiment of the present disclosure, for example, in V2X messages, in specific message generated by VRU of a bicycle, etc, part of velocity, acceleration, or direction of travel may be optional field, because, in specific, it may be hard to accurately identify if vehicle is not car. For example, to reduce implementing cost of short-range communication device, in the short-range communication device itself does not have some of the sensors that calculate this information installed, if short-range communication operates alone with no connection with long-range communication device, may operate to transmit V2X message with not using corresponding field. For example, not to use specific field may include to configure corresponding field as not included in message or as impossible to estimate though it is included. For example, if connected with long-range communication device and if information of velocity, acceleration, or direction of travel can be transferred, short-range communication device may operate to include and transmit such information in V2X message.

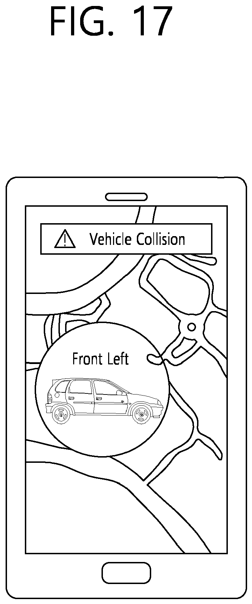

FIG. 17 is a drawing for explaining an example of method performing connection between long-range communication device and short-range communication, according to an embodiment of the present disclosure. FIG. 17 may be combined with various embodiments of the present disclosure.

According to an embodiment of the present disclosure, as shown in FIG. 14, for example, short-range communication device may be installed in a place where it is difficult to interact directly with the user to protect from the external environment (For example, rain or external impact, etc). For example, if two device is connected, information obtained via short-range communication may be also transferred to the user via user interface of long-range communication device, as same scheme, it may operate short-rage communication device based on information inserted by user via short-range communication user interface of long-range communication device. For example, if device receive V2X message (ETSI cooperative awareness message (CAM), decentralized event notification message (DENM), SAE basic safety message (BSM), ETSI vulnerable road user awareness message (VAM), or SAE personal safety message (PSM)) of near car or vehicle, if collision probability is detected with corresponding device, short-range communication device may warn, to user, via user interface of long-range communication device. For example, such warnings may be in a form such as displaying a warning on a screen or generating an audible alert. FIG. 17 is an example of displaying a warning on a screen via smartphone display. For example, if short-range communication device received that neighboring device transmits sensor information sharing V2X message (ETSI collective perception message (CPM) or SAE sensor data sharing message (SDSM)), short-range communication may display sensor information that it includes (For example, obstacle information detected by other vehicle) via long-range communication device. For example, if short-range communication device received that neighboring device transmits maneuver coordination V2X message (ETSI maneuver coordination message (MCM), SAE maneuver sharing and coordinating message (MSCM)), short-range communication device may display route planning information that it includes via long-range communication device, for example, after long-range communication device received response for this planning from user (For example, a response for whether to agree with route planning of other vehicle), long-range communication device may transmit it by transferring it to short-range communication device again. For example, if short-range communication device received traffic light information (ETSI signal phase and timing extended message (SPATEM), SAE SPAT message) or traffic sign information, short-range communication device may display it via long-range communication device.

In an embodiment of the present disclosure, for example, if user interface for transmission/reception message of short-range communication device is utilized, it may be operated to use limited user interface if it not connected with long-range communication device. For example, despite same V2X message-based service, displaying scheme to user may be different according to whether connection with long-range communication device. For example, this limited user interface, especially in view the fact that short-range communication device are likely to be installed in place where it is difficult for them to interact directly with users, rather than using a screen, it may be appropriate to use an interface that can be identified without looking with eyes, such as sound or vibration. For example, after short-range communication device received V2X message of other car or vehicle, if short-range communication device determines collision probability, if short-range communication device has no connection with long-range communication device, short-range communication device may operate to warn via alert or vibration device that is installed on the short-range communication device. For example, if it connected with long-range communication device, it may be possible to use user interface of short-range communication device with user interface of long-range communication device simultaneously. If user interface is changed, reference displaying warning to user may be changed via it. For example, if it only displaying alert or vibration via short-range communication device, excessive alert and vibration may cause a number of inconveniences, it may be appropriate to adjust for displaying when collision risk is relatively high if by strictly configuring reference of warning displaying. However, for example, via long-range communication device, especially if warning screen is displayed by using display, by configuring warning displaying reference relatively less strictly, it may be appropriate to operate to warn via long-range communication device if some risk is expected. For example, two devices are connected, if relatively low collision risk is detected, long-range communication device may warn by using display, for example, if collision risk is higher, long-range communication device may operate to display alert or vibrate with including short-range communication device.

In an embodiment of the present disclosure, for example, it is not connected with the long-range communication device, application that cannot support appropriate service without using user interface of long-range communication device may stop operating, this application may only operate if it connected with long-range communication device and it is able to use its user interface. For example, service that is subject to this optional behavior may be a service that transfer information to a user beyond a simple warning to a user. For example, because sensor information sharing service, at least one of route cooperation service, traffic light information service, traffic sign information service may have limitations with limited user interface, it may operate if it is connected with long-range communication device and its user interface is able to be used.

In an embodiment of the present disclosure, for example, service that are difficult to operate appropriately without using long-range communication device and user interface may have in common that they receive information from another vehicle or roadway installations and display it to user. For example, in situation where not connected with long-range communication device, because necessity to receive message via short-range communication is lower, it may be possible to reduce battery consumption by turning off data reception function of short-range communication. For example, only if user interface may be available in connection with long-range communication device, data reception operation may be performed in short-range communication. For example, in situation where data reception function of short-range communication is turn off, data transmission function may be operational, short-range communication may transmit information such as location for short-range communication device via V2X message, it may operate so that neighboring other vehicle avoid collision. For example, if a short-range communication device that operates independently with no connection with long-range communication device does not perform data reception, necessity of installing software that processes reception data to short-range communication device may be removed. For example, to reduce more implementation cost of short-range communication device, in short-range communication device, receiving function of packet of V2X message may only be implemented, function that extract from received packet (For example, extracting location or velocity information of other vehicle included in received specific V2X message) or operating application that is needed for user from this information may be installed to long-range communication device. For example, this function that operates application may include function calculating collision possibility with corresponding vehicle from information of reception V2X message, function checking that reception V2X message is a valid message, etc. For example, short-range communication device may decode packet of V2X message and may operate for further processing by transferring reception successful packet to long-range communication device.

In an embodiment of the present disclosure, for example, as best simple way, if connected with long-range communication device, it may be configured to perform connection operation, or otherwise it may be configured to perform individual operation. For example, this may significantly consuming battery of long-range communication device, though long-range communication device is connected, performing individual operation may be more advantageous according to situation. In an embodiment, for example, it may be decided according to battery remaining of the long-range communication. For example, if battery remaining is below a certain level, it may operate to transition individual operation of short-range communication device. For example, when short-range communication device normally perform individual operate, if specific accident is occurred, short-range communication may transit to connection operation with long-range communication device. For example, when short-range communication receives V2X message individually, if message that satisfies specific condition is received, short-range communication device may transit to connection operation. For example, message that satisfies that condition may be a message that service needing connection operation relates, for example, message including information for traffic light or traffic (ETSI SPATEM (Signal Phase And Timing Extended Message), SAE SPAT message), message notifying specific accident on road (if specific event field among ETSI DENM (decentralized event notification message), SAE BSM (basic safety message) (For example, VehicleEventFlags of the VehicleSafetyExtensions field is configured as specific value in BSM) is configured) may be exist. For example, if condition, that represents risk of collision with other vehicle analyzed by short-range communication device alone receiving V2X messages, by the higher than predetermined level, the number of other vehicles is higher than predetermined level, velocity or accelerate of other vehicle is higher than predetermined level, distance of other vehicle is higher than predetermined level, or a combination of some of these, is satisfied, short-range communication device may transit to connection operation with long-range communication device.

In an embodiment of the present disclosure, for example, if V2X message is received via short-range communication, short-range communication device may perform confirmation operation for that message is valid based on authentication of corresponding message. For example, validity confirmation operation may include verification of V2X message authentication and/or misbehavior detection for transmitting UE of V2X message. For example, as the number of UE transmitting V2X message nearby spikes, needing validity confirmation operation processing capacity may be also spikes, if short-range communication device is to operate in dense vehicle environment such as city center, it must have a very large validity confirmation operation processing capacity, which can lead to increased implementation cost.

In an embodiment of the present disclosure, for example, short-range communication may have limited number of validity confirmation operation processing capacity, if it requires more than those, short-range communication device may perform remainings via long-range communication device. For example, it may be desirable for short-range communication device to process relatively important message itself, and it may process remainings via long-range communication. For example, relatively important message may include message generated when specific event occur such as message specifically configured with specific field in ETSI DENM or SAE BSM (For example, VehicleEventFlags of VehicleSafetyExtensions field in BSM) or for example, message transmitted from vehicle that is closer in distance or has a higher velocity/acceleration may be considered relatively more important even though message has same attribute. For example, an embodiment of the present disclosure, by confirming validity more rapidly in short-range communication device, risk of collision can be more rapidly prepared.

In an embodiment of the present disclosure, for example, if long-range communication device is requested validity process of some V2X message, long-range communication device may process it by utilizing function installed itself, or, for example, to reduce implementation cost or batter consumption of long-range communication device, it may be possible for long-range communication to transmit these messages to a specific server, and for that server to perform validity processing operation on behalf of long-range communication device. For example, operation to process additional process via server may add supplemental long-range communication function and may include operation to process message exceeding message validity confirmation capacity of short-range communication device in a server,

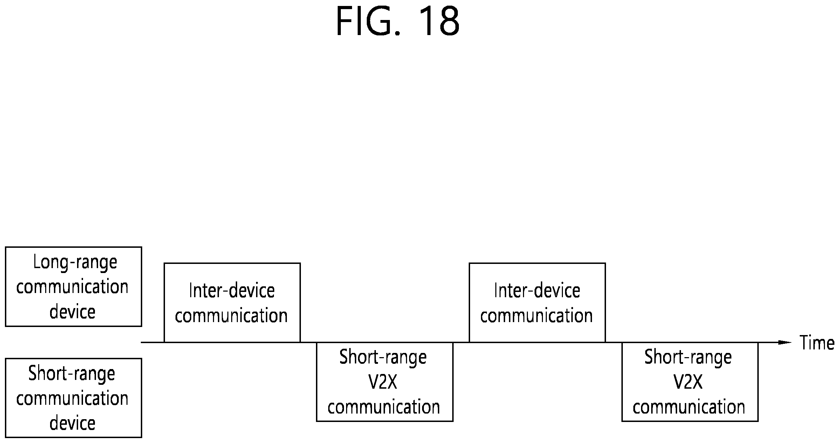

FIG 18 is a drawing for explaining an example of method performing connection between long-range communication device and short-range communication, according to an embodiment of the present disclosure. The embodiment of FIG. 18 may be combined with various embodiments of the present disclosure.

Referring to FIG. 18, for example, it may be desirable to performing communication between two devices by minimum battery consumption. For example, candidate time interval that may occur communication between two devices may be configured, it may reduce battery consumption by turning off communication module between devices in different interval while communicating between two devices by using this interval.

For example, when two devices connected with wireless, connecting by using unlicensed band such as WiFi or Bluetooth may be assumed. For example, frequency range used between two devices may be contigious to a frequency range used for short-range communication. For example, while short-range communication use intelligent transport system (ITS) frequency range of 5.9 GHz (For example, 5850-5925 MHz), communication between two devices may use unlicensed band that is located nearby (For example, Unlicensed National Information Infrastructure 3 (U-NII-3) frequency range of 5725-5850 MHz or U-NII-5 (Unlicensed National Information Infrastructure 3) frequency range of 5925-6425 MHz. For example, interference may occur between communication between two devices and short-range communication, for example, short-range communication device may transmit to long-range communication in unlicensed band, significant interference may occur in V2X message received from ITS frequency range at the same time, for example, if short-range communication transmit V2X message to ITS frequency range, significant interference may occur in message reception of long-range communication device from unlicensed band at the same time. For example, to reduce implementation cost of short-range communication device initially, because transmission/reception device in ITS frequency range is designed to be recycled to transmission/reception in nearby unlicensed band, if performing transmission or reception in one frequency range, it may be impossible to transmission or reception in other frequency band. For example, to more effective perform operation, time interval transmitting or receiving V2X message of short-range communication device and time interval communicating with long-range communication device may be separated, for example, in each time interval, it may be operated to only perform transmission/reception of V2X message or communication with long-range communication device. For example, short-range communication device may inform long-range communication by setting time interval that important V2X message is expected to be transmitted or received, for example, communication between two devices may be operated to avoid this time interval. FIG. 18 is an embodiment of operation above.

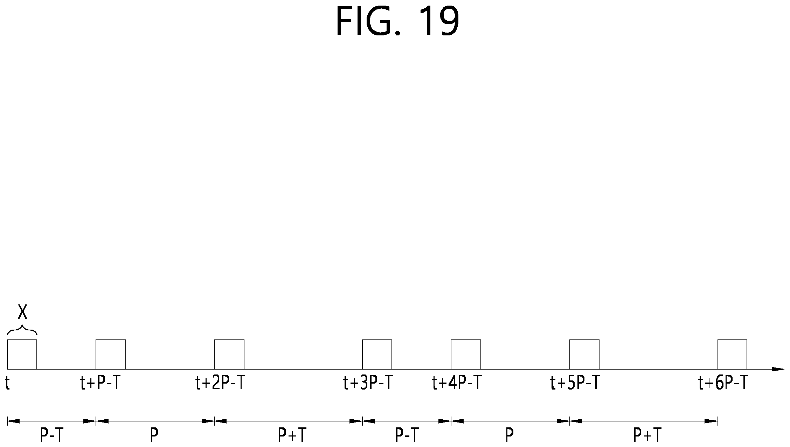

FIG. 19 is a drawing for explaining an example of method performing connection between long-range communication device and short-range communication, according to an embodiment of the present disclosure. The embodiment of FIG. 19 may be combined with various embodiments of the present disclosure.

Referring to FIG. 19, in embodiment of the present disclosure, for example, V2X message that other vehicle transmits may have attribute to be generated periodically. For example, if time interval for communication between devices may be occurred repeatedly with specific periodicity, message that specific vehicle transmits may be overlapped with this periodicity, for example, problem of long-time consecutive missing of message of this vehicle may occur. For example, time interval representing time interval for communication between devices may not be fixed but may be configured to be changed in steady pattern on time, it may be prevented from that continuous V2X message reception by specific periodicity is impossible. In FIG. 19, as an embodiment, there may be that length of time interval of communication between devices is X and this time interval may be commonly represented as periodicity P. As an embodiment, for example, there may be feature that unevenly makes interval between each time interval by adding, subtracting, or maintaining time T from starting point of nth time interval relative to t+(n-1)*P. For example, first time interval may be represented at point t, second time interval may be adjusted to be represented at a point that from alternative periodicity P ahead of T. For example, by that interval between starting point of initial four time interval becomes P-T, P, P+T, respectively, problem explained above may be solved. For example, by generalizing this principle of operation, relative to t+(n-1)*P that is point that nth time interval starts nominally periodically, f(n) that is offset changing in point that this actual time interval starts may be applied, may be operated to start in t+(n-1)*P+f(n). An embodiment of FIG. 19 may corresponds to the case that is configured with f(3k+1)=0, f(3k+2)=-T, f(3k)=-T for integer k.

An embodiment of the present disclosure, for example, even though case that short-range communication is installed to a vehicle other than car is mainly explained, method proposed in an embodiment of the present disclosure may also be applied to connection of short-range communication device and long-range communication device. For example, specifically, it may be effective when there is need to reduce implementation cost of short-range communication device installed in vehicle (For example, when installing it as additional device after generating vehicle)

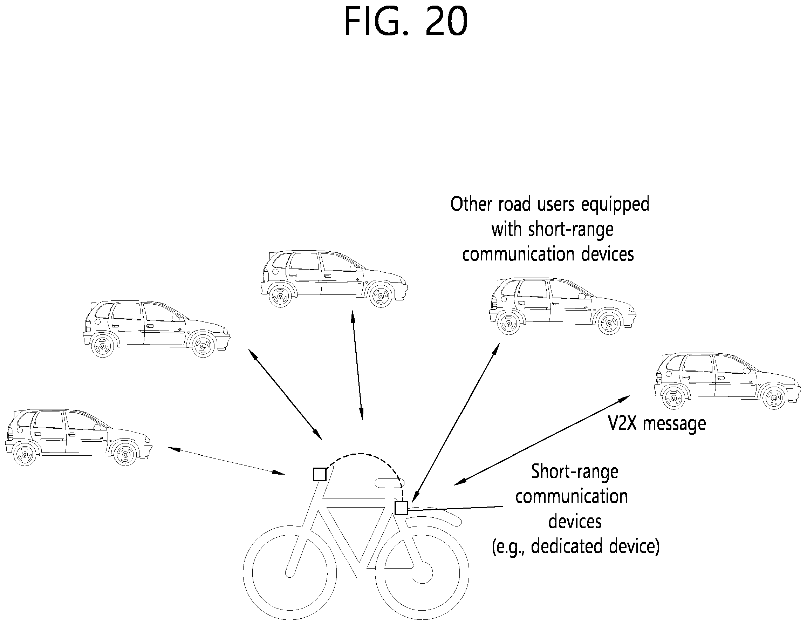

FIG. 20 is a figure for explaining problem of method performing communication between devices for processing message an embodiment of the present disclosure. The embodiment of FIG. 20 may be combined with various embodiments of the present disclosure.

Referring to FIG. 20, for example, short-range communication device may transmit/receive data with shorter distance UE based on direct communication between devices such as sidelink. For example, short-range communication device may be included in vehicle. For example, long-range communication device may perform communication with other UE or server while transmitting or receiving signal with base station. For example, long-range communication device may include memory, processor, application, measuring device (For example, GNSS based measuring device), user interface device (For example, input/output unit, display device, vibration device, voice device (For example, speaker), video device, camera, microphone, user input, and/or haptic module, etc), and/or sensor (For example, optical sensor, touch sensor, distance sensor, velocity sensor, or acceleration sensor, etc). For example, as alternative of implementing all features to each device, connection between short-range communication device and long-range communication device may be performed. For example, short-range communication device may be able to install/attach/detach long-range communication device. For example, long-range communication device may provide user interface information to user or may receive user interface information from user via user interface. For example, short-range communication device and long-range communication device may be connected via wireless communication interface such as LTE/NR sidelink, IEEE 802.11p/bd, WiFi, Bluetooth, Low Power Wide Area Network(LPWAN), ZigBee or wired local communication interface such as USB cable.

For example, V2X message may be received via short-range communication device. For example, V2X message may include Cooperative Awareness Message (CAM) of periodic message type or Decentralized Environmental Notification Message (DENM) of event triggered message type. For example, when V2X message is received, first device (For example, short-range communication device) may perform confirmation operation for message being valid based on authentication (For example, key, direct authentication, etc) of V2X message. For example, communication device transmitting V2X message to first device may be vehicle, and may transmit V2X message periodically. For example, the first device may be in environment with a higher density of vehicle such as city center. For example, V2X message may periodically be required to be processed at once, quickly, and a lot via a large number of communication device.

For example, first device processing communication with short-range communication device may be supported V2X service may have to have processing capacity to withstand this throughput/throughput rate of this V2X message. For example, cost for implementing this processing capacity to first device processing communication with short-range communication device may be increased.

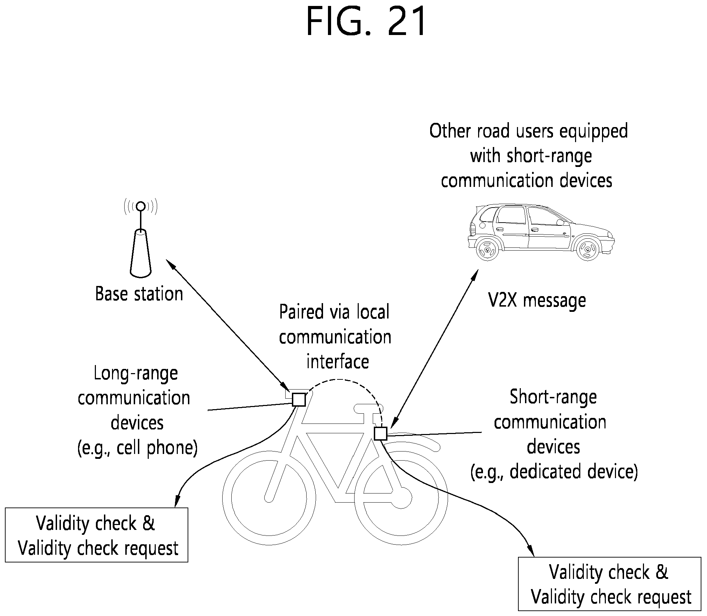

FIG. 21 is a figure for explaining method performing communication between devices for processing message, according to an embodiment of the present disclosure. The embodiment of FIG. 21 may be combined with various embodiments of the present disclosure.

Referring to FIG. 21, in an embodiment of the present disclosure, for example, first device may receive first message and/or second message from at least one device. For example, the first message and/or the second message may include V2X message. For example, first device may determine that which priority of message is higher among priority of the first message and/or priority of the second message. For example, priority of the first message and/or priority of the second message may be determined based on event information (For example, information generated when event is occur, information representing that vehicle breakdown event is occurred, information representing that traffic accident event is occured, or etc) or attribute information (For example, periodic message, aperiodic message). For example, the priority of the first message and/or the priority of the second message may be determined based on parameter related to at least one third device that transmitted the first message and/or the second message or at least one fourth device that causes the first message and/or the second message. For example, the priority of the first message and/or the priority of the second message may be determined based on distance between the first device and the at least one third device or between the first device and the at least one fourth device. For example, the priority of the first message and/or the priority of the second message may be determined based on velocity/acceleration of the at least one third device or the at least one fourth device.

For example, first device may perform validity check for the first message through authentication of the first message, based on the priority of the first message is higher than the priority of the second message. For example, first device validity check for the second message may be skipped, based on the priority of the first message is higher than the priority of the second message. For example, first device may transmit validity check request information of the second message, based on the priority of the first message is higher than the priority of the second message. For example, the validity check request information may include the second message and authentication of the second message. For example, second device may perform validity check for the second message. For example, report/transmit, to a third device (For example, base station, server), the second message, the authentication of the second message, and/or validity check request information for requesting validity check for the second message.

In an embodiment of the present disclosure, for example, first device may be more quickly prepared for risk of collision with other device by confirming validity of the V2X message more quickly.

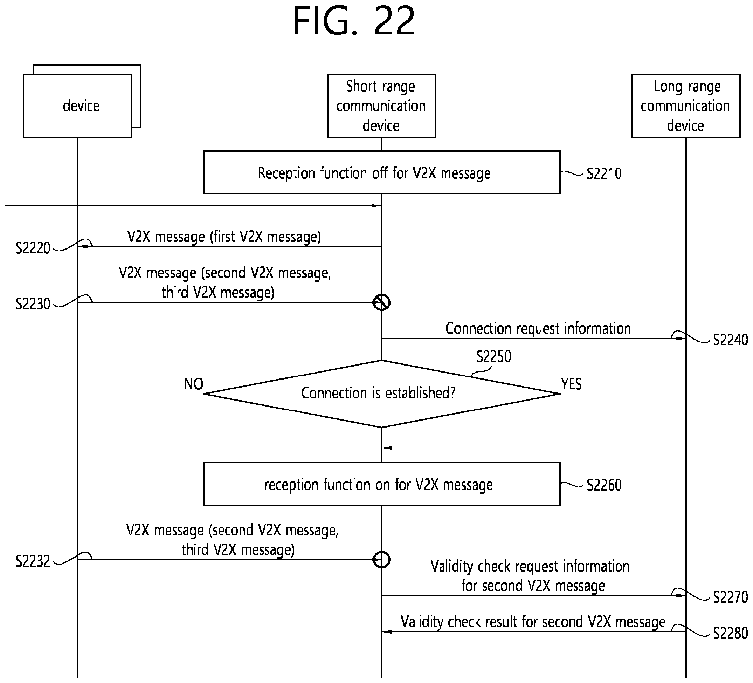

FIG. 22 is a figure for explaining procedure processing communication between devices for processing message, according to an embodiment of the present disclosure. The embodiment of FIG.22 may be combined with various embodiment of the present disclosure.

Referring to FIG. 22, for example, in step S2210, short-range communication device may turn off reception function for V2X message.

In step S2220, for example, short-range communication device may transmit, to at least one device, V2X message from at least one device (For example, first V2X message, second V2X message, third V2X message) and authentication (For example, key, direct authentication) of these V2X message.

In step S2230, for example, short-range communication device may block (For example, reception function off, reception prohibit) V2X message from at least one device (For example, first V2X message, second V2X message, third V2X message) and may block receiving authentication (For example, key, direct authentication) for the V2X message.

In step S2240, for example, short-range communication device may transmit, to long-range communication device, link request information for requesting connection (For example, link) between short-range communication device and long-range communication device. For example, connection (For example, link) between short-range communication device and long-range communication device may be established. For example, this connection may be established based on security (For example, pairing). For example, this connection may include at least one of TE/NR sidelink, IEEE 802.11p/bd, WiFi, Bluetooth, Low Power Wide Area Network (LPWAN), ZigBee. For example, this connection may include the PC5-RRC connection.

In step S2250, for example, short-range communication device may determine whether connection (For example, link) between short-range communication device and long-range communication device is established. For example, short-range communication device may turn off reception function for V2X message, based on connection (For example, link) between short-range communication device and long-range communication device not being established.

In step S2260, for example, short-range communication device may turn on reception function for V2X message, based on connection (For example, link) between short-range communication device and long-range communication device being established.

In step S2232, for example, short-range communication device may allow to receive V2X message from at least one device (For example, first V2X message, second V2X message, third V2X message) and authentication (For example, key, direct authentication) for the V2X message.

In step S2270, for example, short-range communication device may determine whether priority of the second V2X message is higher than priority of the third V2X message. In step S2270, for example, short-range communication device may perform validity check for V2X message (For example, the first V2X message, the second V2X message, the third V2X message), based on the priority of the first V2X message being not higher than the priority of the second V2X message. In step S2270, for example, short-range communication device may perform validity check for the first V2X message, based on the priority of the first V2X message being higher than the priority of the second V2X message. For example, short-range communication device may skip validity check for the second V2X message, based on the priority of the first V2X message being higher than the priority of the second V2X message.

In step S2280, For example, short-range communication device may transmit, to long-range communication device, validity check request information for requesting the validity check for the second V2X message. In step S2280, for example, short-range communication device may receive, from long-range communication device, information related to result of the validity check for the second V2X message.

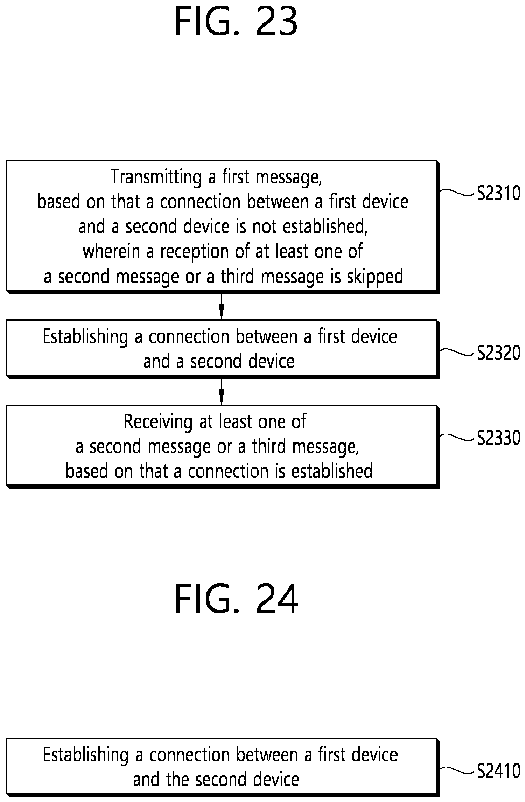

FIG. 23 shows a method for performing wireless communication by a first device, based on an embodiment of the present disclosure.

Referring to FIG. 23, in step S2310, for example, the first device may transmit a first message, based on that a connection between the first device and a second device is not established, wherein a reception of at least one of a second message or a third message is skipped. In step S2320, for example, the first device may establish the connection between the first device and the second device. In step S2330, for example, the first device may receive at least one of the second message or the third message, based on that the connection is established.

Additionally or alternatively, the first device may transmit, to application layer of the second device, the at least one of the second message or the third message, based on that the reception of the at least one of the second message or the third message is succeeded.

Additionally or alternatively, the first device may transmit, to the second device, operation request information for requesting performing operation related to the at least one of the second message or the third message, based on that the reception of the at least one of the second message or the third message is succeeded.

Additionally or alternatively, wherein the operation request information may include vehicle-to-everything (V2X) information request information for requesting V2X information included in the at least one of the second message or the third message.

Additionally or alternatively, the V2X information may include location information of at least one device that transmitted the at least one of the second message or the third message, velocity information of the at least one device, acceleration information of the at least one device, or possibility of collision information between the at least one device and the first device.

Additionally or alternatively, wherein the operation request information may include validity check request information for requesting validity check for the at least one of the second message or the third message.

Additionally or alternatively, the first device may receive sidelink control information (SCI) via physical sidelink control channel (PSSCH), based on first sidelink (SL) resource.

Additionally or alternatively, wherein the second authenticator related to the second message may be received via physical sidelink control channel (PSSCH), based on the first SL resource.

Additionally or alternatively, wherein the validity check request information may include the third message and the third authenticator related to the third message.

Additionally or alternatively, wherein the validity check request information may be transmitted to the second device, based on that a number of at least one device transmitting the at least one of the second message and a number of at least one device transmitting the third message is greater than or equal to a threshold.

Additionally or alternatively, wherein the priority of the second message may be determined based on at least one of event information representing event that is responsible for generation of the second message or dynamic state information related to at least one device transmitting the second message.

Additionally or alternatively, wherein the dynamic state information may include at least one of location information of the at least one device, distance information of between at least one device and the first device, velocity information for the at least one device, or acceleration information of the at least one device.

Additionally or alternatively, wherein the validity check for the second message may be performed, based on that the priority of the second message is higher than the priority of the third message.

Additionally or alternatively, wherein the validity check for the third message may be skipped, based on that the priority of the second message is higher than the priority of the third message.

Additionally or alternatively, wherein the first message may include vehicle-to-everything (V2X) message.

Additionally or alternatively, wherein the second message may include vehicle-to-everything (V2X) message.

Additionally or alternatively, wherein the V2X message may include at least one of event information, location information related to at least one device transmitting the second message, dynamic state information related to the at least one device, or status information of the second message.

Additionally or alternatively, the first device may establish a connection between the first device and the second

24

device.

Additionally or alternatively, the first device may receive, from the second device, dynamic status information related to the first device, based on that the connection is established.

Additionally or alternatively, the first device may transmit V2X message including the dynamic status information related to the first device.

Additionally or alternatively, the first device may transmit, to the second device, information for outputting first user interface information, based on that at least one of the second message or the third message is received.

Additionally or alternatively, the first device may establish a connection between the first device and the second device.

Additionally or alternatively, the first device may transmit, to the second device, information for outputting second user interface information, based on that the connection is established and at least one of the second message or the third message is received.

Additionally or alternatively, the first user interface information may include at least one of voice information or vibration information.

Additionally or alternatively, wherein the second user interface information may include display information.

Additionally or alternatively, wherein the display information may include information related to route plan of at least one device that transmitted the second message.

Additionally or alternatively, the first device may receive, from the second device, information related to agreement for the route plan.

Additionally or alternatively, wherein validity check request information may be transmitted to the second device, based on that the second message is received and distance between at least one device that transmits the second message and the first device is lower than or equal to second threshold, or based on that the second message is received and at least one of velocity of the least one device or acceleration of the least one device is greater than or equal to third threshold.

Additionally or alternatively, wherein first time when at least one of the second message or the third message is received and second time when validity check request information is transmitted may be different from each other.

Additionally or alternatively, the first device may transmit, to the second device, information related to the first time.

Additionally or alternatively, wherein the first time may be configured based on period, index related to the period, and offset related to the index.

The proposed method may be adapted to the device according to various embodiments of the present disclosure. First, the processor (102) of the first device (100) may control the transceiver (106) to transmit a first message, based on that a connection between the first device and a second device is not established, wherein a reception of at least one of a second message or a third message is skipped. For example, the processor (102) of the first device (100) may establish the connection between the first device and the second device. For example, the processor (102) of the first device (100) may control the transceiver (106) to receive at least one of the second message or the third message, based on that the connection is established.

According to an embodiment of the present disclosure, the first device performing wireless communication may be provided. The first device comprising at least one memory storing instructions; at least one transceiver; and at least one processor connected to the at least one memory and the at least one transceiver, wherein the at least one processor is adapted to execute instructions to perform operations comprising: may transmit a first message, based on that a connection between the first device and a second device is not established, wherein a reception of at least one of a second message or a third message is skipped. For example, based on the instructions executed by the at least one processor, the first device may establish the connection between the first device and the second device. For example, based on the instructions executed by the at least one processor, the first device may receive at least one of the second message or the third message, based on that the connection is established.

According to an embodiment of the present disclosure, the apparatus configured for control the first terminal may be provided. The apparatus comprising at least one processor; and at least one memory connected to the at least one processor and storing instructions that, based on being executed by the at least one processor, cause the at least one processor to perform operations comprising: may transmit a first message, based on that a connection between the first device and a second device is not established, wherein a reception of at least one of a second message or a third message is skipped. For example, based on the instructions executed by the at least one processor, the first device may establish the connection between the first device and the second device. For example, based on the instructions executed by the at least one processor, the first device may receive at least one of the second message or the third message, based on that the connection is established.

According to an embodiment of the present disclosure, a non-transitory computer-readable storage medium storing instructions may be provided. The instructions, based on being executed by at least one processor, cause the at least one processor to perform operations comprising: the first device to transmit a first message, based on that a connection between the first device and a second device is not established, wherein a reception of at least one of a second message or a third message is skipped. For example, the instructions, based on being executed by at least one processor, cause the at least one processor to: the first device to establish the connection between the first device and the second device. For example, the instructions, based on being executed by at least one processor, cause the at least one processor to: the first device to receive at least one of the second message or the third message, based on that the connection is established.

FIG. 24 shows a method for performing wireless communication by a second device, based on an embodiment of the present disclosure. The embodiment of FIG. 24 may be combined with various embodiments of the present disclosure.

Referring to FIG. 24, in step S2410, for example, the first device may establish a connection between a first device and the second device. For example, wherein the first message is transmitted, based on that the connection between the first device and the second device is not established. For example, wherein a reception of at least one of a second message or a third message is skipped. For example, wherein at least one of the second message or the third message is received, based on that the connection is established.

Additionally or alternatively, the first device may transmit, to application layer of the second device, the at least one of the second message or the third message, based on that the reception of the at least one of the second message or the third message is succeeded.

Additionally or alternatively, the first device may transmit, to the second device, operation request information for requesting performing operation related to the at least one of the second message or the third message, based on that the reception of the at least one of the second message or the third message is succeeded.

Additionally or alternatively, wherein the operation request information may include vehicle-to-everything (V2X) information request information for requesting V2X information included in the at least one of the second message or the third message.

Additionally or alternatively, the V2X information may include location information of at least one device that transmitted the at least one of the second message or the third message, velocity information of the at least one device, acceleration information of the at least one device, or possibility of collision information between the at least one device and the first device.

Additionally or alternatively, wherein the operation request information may include validity check request information for requesting validity check for the at least one of the second message or the third message.

Additionally or alternatively, wherein sidelink control information (SCI) may be received via physical sidelink control channel (PSSCH), based on first sidelink (SL) resource.

Additionally or alternatively, wherein the second authenticator related to the second message may be received via physical sidelink control channel (PSSCH), based on the first SL resource.

Additionally or alternatively, wherein the validity check request information may include the second message and the second authenticator related to the second message.

Additionally or alternatively, wherein the validity check request information may be transmitted to the second device, based on that a number of at least one device transmitting the at least one of the second message and a number of at least one device transmitting the second message is greater than or equal to a threshold.

Additionally or alternatively, wherein the priority of the second message may be determined based on at least one of event information representing event that is responsible for generation of the second message or dynamic state information related to at least one device transmitting the second message.

Additionally or alternatively, wherein the dynamic state information may include at least one of location information of the at least one device, distance information of between at least one device and the first device, velocity information for the at least one device, or acceleration information of the at least one device.

Additionally or alternatively, wherein the validity check for the first message may be performed, based on that the priority of the second message is higher than the priority of the third message.

Additionally or alternatively, wherein the validity check for the second message may be skipped, based on that the priority of the first message is higher than the priority of the second message.

Additionally or alternatively, wherein the first message may include vehicle-to-everything (V2X) message.

Additionally or alternatively, wherein the V2X message may include at least one of event information, location information related to at least one device transmitting the first message, dynamic state information related to the at least one device, or status information of the first message.

Additionally or alternatively, the second device may establish a connection between the first device and the second device.

Additionally or alternatively, the second device may transmit, to the first device, dynamic status information related to the first device, based on that the connection is established.

Additionally or alternatively, V2X message including the dynamic status information related to the first device may be transmitted.

Additionally or alternatively, the second device may receive, from the first device, information for outputting first user interface information, based on that at least one of the first message or the second message is received.

Additionally or alternatively, the second device may establish a connection between the first device and the second device.

Additionally or alternatively, the second device may receive, from the first device, information for outputting second user interface information, based on that the connection is established and at least one of the first message or the second message is received.

Additionally or alternatively, the first user interface information may include at least one of voice information or vibration information.

Additionally or alternatively, wherein the second user interface information may include display information.

Additionally or alternatively, wherein the display information may include information related to route plan of at least one device that transmitted the first message.

Additionally or alternatively, the second device may transmit, to the first device, information related to agreement for the route plan.

Additionally or alternatively, wherein validity check request information may be received from the first device, based on that the first message is received and distance between at least one device that transmits the first message and the first device is lower than or equal to second threshold, or based on that the first message is received and at least one of velocity of the least one device or acceleration of the least one device is greater than or equal to third threshold.

Additionally or alternatively, wherein first time when at least one of the first message or the second message is received and second time when validity check request information is transmitted may be different from each other.

Additionally or alternatively, the second device may receive, from the first device, information related to the first time.

Additionally or alternatively, wherein the first time may be configured based on period, index related to the period, and offset related to the index.

The proposed method may be adapted to the device according to various embodiments of the present disclosure. First, for example, the processor (202) of the second device (200) may establish a connection between a first device and the second device. For example, wherein the first message is transmitted, based on that the connection between the first device and the second device is not established. For example, wherein a reception of at least one of a second message or a third message is skipped. For example, wherein at least one of the second message or the third message is received, based on that the connection is established.

In an embodiment of the present disclosure, a method for performing wireless communication by a second device is proposed. For example, the second device may establish a connection between a first device and the second device. For example, wherein the first message is transmitted, based on that the connection between the first device and the second device is not established. For example, wherein a reception of at least one of a second message or a third message is skipped. For example, wherein at least one of the second message or the third message is received, based on that the connection is established.

According to an embodiment of the present disclosure, the second device performing wireless communication may be provided. The second device comprising at least one memory storing instructions; at least one transceiver; and at least one processor connected to the at least one memory and the at least one transceiver, wherein the at least one processor is adapted to execute instructions to perform operations comprising: may establish a connection between a first device and the second device. For example, wherein the first message is transmitted, based on that the connection between the first device and the second device is not established. For example, wherein a reception of at least one of a second message or a third message is skipped. For example, wherein at least one of the second message or the third message is received, based on that the connection is established.

According to an embodiment of the present disclosure, the apparatus configured for control a second device may be provided. The apparatus comprising at least one processor; and at least one memory connected to the at least one processor and storing instructions that, based on being executed by the at least one processor, cause the at least one processor to perform operations comprising: may establish a connection between a first device and the second device. For example, wherein the first message is transmitted, based on that the connection between the first device and the second device is not established. For example, wherein a reception of at least one of a second message or a third message is skipped. For example, wherein at least one of the second message or the third message is received, based on that the connection is established.

According to an embodiment of the present disclosure, a non-transitory computer-readable storage medium storing instructions may be provided. The instructions, based on being executed by at least one processor, cause the at least one processor to perform operations comprising: the second device to establish a connection between a first device and the second device. For example, wherein the first message is transmitted, based on that the connection between the first device and the second device is not established. For example, wherein a reception of at least one of a second message or a third message is skipped. For example, wherein at least one of the second message or the third message is received, based on that the connection is established.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

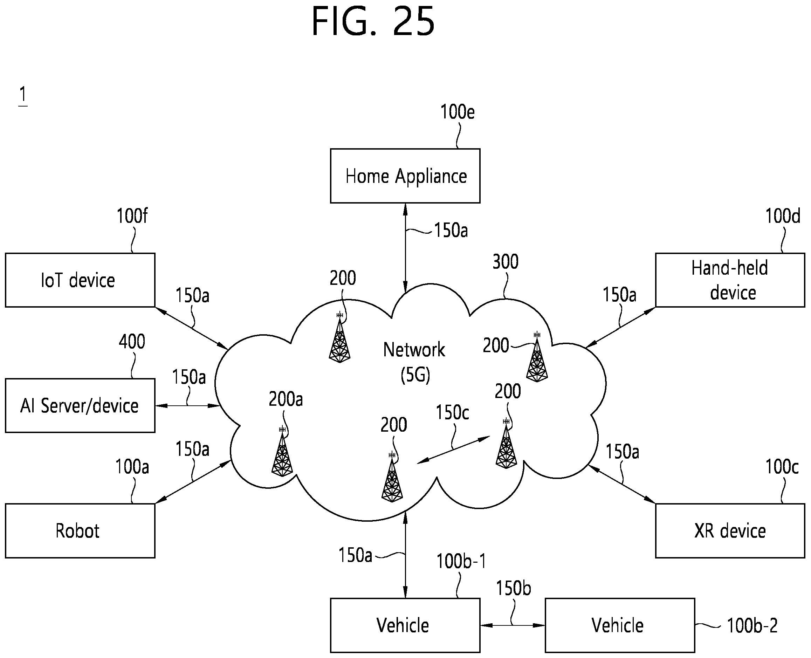

FIG. 25 shows a communication system 1, based on an embodiment of the present disclosure. The embodiment of FIG. 25 may be combined with various embodiments of the present disclosure.

Referring to FIG. 25, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

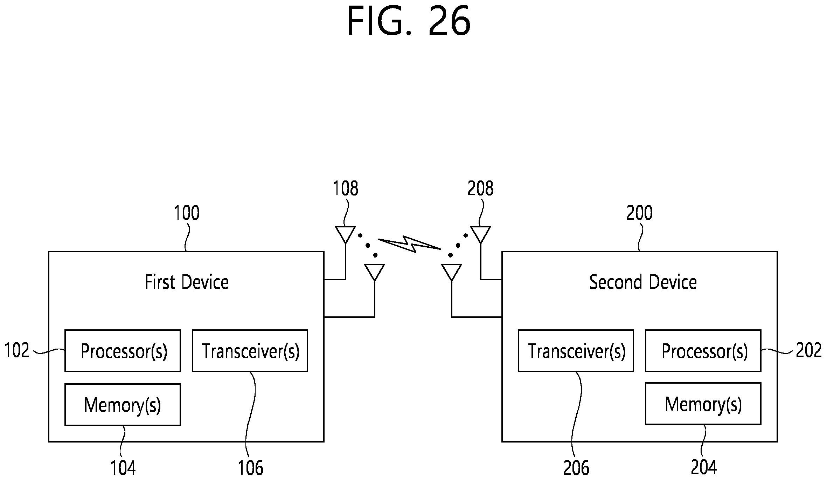

FIG. 26 shows wireless devices, based on an embodiment of the present disclosure. The embodiment of FIG. 26 may be combined with various embodiments of the present disclosure.

Referring to FIG. 26, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 25.

The first wireless device 100 may include one or more processors 102 and at least one memory 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and at least one memory 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

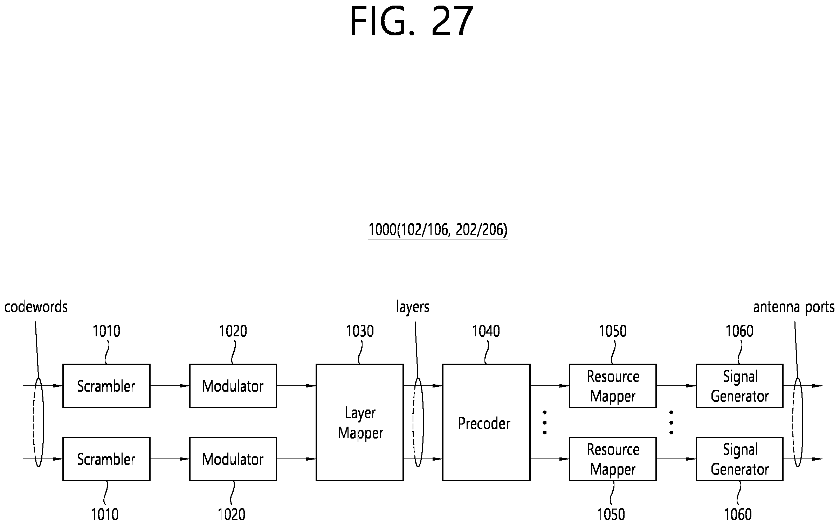

FIG. 27 shows a signal process circuit for a transmission signal, based on an embodiment of the present disclosure. The embodiment of FIG. 27 may be combined with various embodiments of the present disclosure.

Referring to FIG. 27, a signal processing circuit 1000 may include scramblers 1010, modulators 1020, a layer mapper 1030, a precoder 1040, resource mappers 1050, and signal generators 1060. An operation/function of FIG. 27 may be performed, without being limited to, the processors 102 and 202 and/or the transceivers 106 and 206 of FIG. 26. Hardware elements of FIG. 27 may be implemented by the processors 102 and 202 and/or the transceivers 106 and 206 of FIG. 26. For example, blocks 1010 to 1060 may be implemented by the processors 102 and 202 of FIG. 26. Alternatively, the blocks 1010 to 1050 may be implemented by the processors 102 and 202 of FIG. 26 and the block 1060 may be implemented by the transceivers 106 and 206 of FIG. 26.

Codewords may be converted into radio signals via the signal processing circuit 1000 of FIG. 27. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 27. For example, the wireless devices (e.g., 100 and 200 of FIG. 26) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

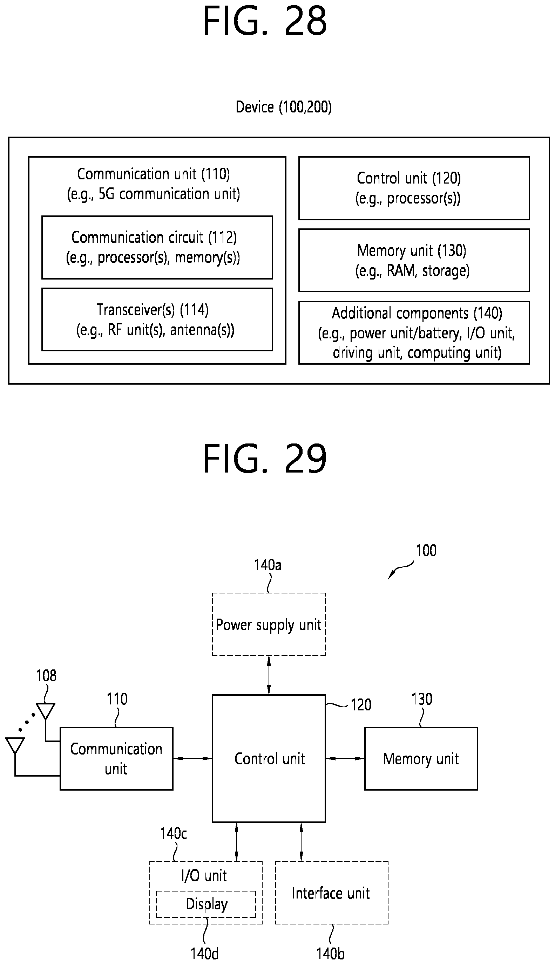

FIG. 28 shows another example of a wireless device, based on an embodiment of the present disclosure. The wireless device may be implemented in various forms according to a use-case/service (refer to FIG. 25). The embodiment of FIG. 28 may be combined with various embodiments of the present disclosure.

Referring to FIG. 28, wireless devices 100 and 200 may correspond to the wireless devices 100 and 200 of FIG. 26 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 26. For example, the transceiver(s) 114 may include the one or more transceivers 106 and 206 and/or the one or more antennas 108 and 208 of FIG. 26. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 25), the vehicles (100b-1 and 100b-2 of FIG. 25), the XR device (100c of FIG. 25), the hand-held device (100d of FIG. 25), the home appliance (100e of FIG. 25), the IoT device (100f of FIG. 25), a digital broadcast terminal, a hologram device, a public safety device, an MTC device, a medicine device, a fintech device (or a finance device), a security device, a climate/environment device, the AI server/device (400 of FIG. 25), the BSs (200 of FIG. 25), a network node, etc. The wireless device may be used in a mobile or fixed place according to a use-example/service.

In FIG. 28, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 28 will be described in detail with reference to the drawings.

FIG. 29 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 29 may be combined with various embodiments of the present disclosure.

Referring to FIG. 29, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 28, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

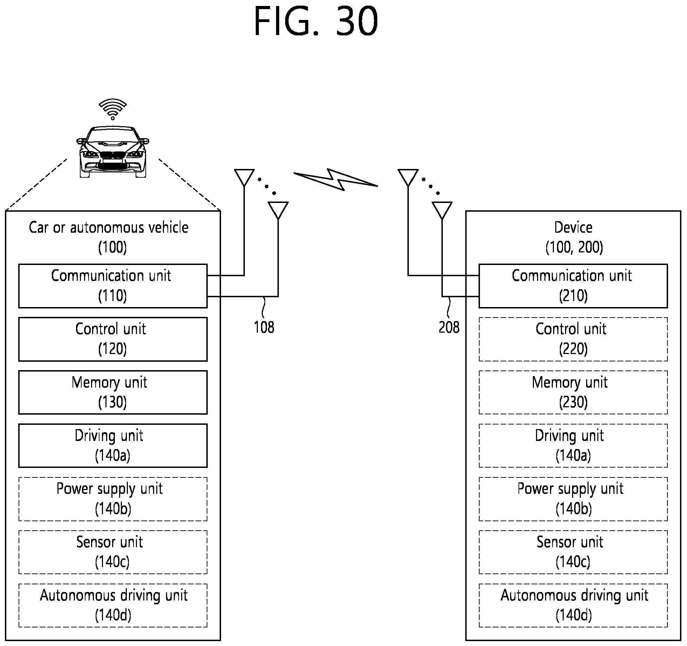

FIG. 30 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 30 may be combined with various embodiments of the present disclosure.

Referring to FIG. 30, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 28, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1.  A method for performing wireless communication by a first device, the method comprising:

    transmitting a first message, based on that a connection between the first device and a second device is not established,
    wherein a reception of at least one of a second message or a third message is skipped;
    establishing the connection between the first device and the second device; and
    receiving at least one of the second message or the third message, based on that the connection is established.

2.  The method of claim 1, further comprising:
    transmitting, to application layer of the second device, the at least one of the second message or the third message, based on that the reception of the at least one of the second message or the third message is succeeded.

3.  The method of claim 1, further comprising:
    transmitting, to the second device, operation request information for requesting performing operation related to the at least one of the second message or the third message, based on that the reception of the at least one of the second message or the third message is succeeded.

4.  The method of claim 3,

    wherein the operation request information includes vehicle-to-everything (V2X) information request information for requesting V2X information included in the at least one of the second message or the third message, and
    wherein the V2X information includes location information of at least one device that transmitted the at least one of the second message or the third message, velocity information of the at least one device, acceleration information of the at least one device, or possibility of collision information between the at least one device and the first device.

5.  The method of claim 4,
    wherein the operation request information includes validity check request information for requesting validity check for the at least one of the second message or the third message.

6.  The method of claim 5, further comprising:

    wherein the second message includes second authenticator to the second message, and
    wherein the third message includes third authenticator related to the third message,
    performing validity check for the second message, based on priority of the second message and priority of the third message,
    wherein validity check of the third message is skipped, and
    wherein the operation request information including the validity check request information for requesting the validity check of the third message is transmitted to the second device.

7.  The method of claim 6, further comprising:

    receiving sidelink control information (SCI) via physical sidelink control channel (PSSCH), based on first sidelink (SL) resource,
    wherein the second authenticator related to the second message is received via physical sidelink control channel (PSSCH), based on the first SL resource.

8.  The method of claim 6,

wherein the validity check request information includes the third message and the third authenticator related to the third message, and

wherein the validity check request information is transmitted to the second device, based on that a number of at least one device transmitting the at least one of the second message and a number of at least one device transmitting the third message is greater than or equal to a threshold.

9. The method of claim 6,
wherein the priority of the second message is determined based on at least one of event information representing event that is responsible for generation of the second message or dynamic state information related to at least one device transmitting the second message.

10. The method of claim 9,
wherein the dynamic state information includes at least one of location information of the at least one device, distance information of between at least one device and the first device, velocity information for the at least one device, or acceleration information of the at least one device.

11. The method of claim 6,

wherein the validity check for the second message is performed, based on that the priority of the second message is higher than the priority of the third message, and

wherein the validity check for the second message is skipped, based on that the priority of the second message is higher than the priority of the third message.

12. The method of claim 1,

wherein the first message includes vehicle-to-everything (V2X) message, and

wherein the V2X message includes at least one of event information, location information related to at least one device transmitting the second message, dynamic state information related to the at least one device, or status information of the second message.

13. The method of claim 1, further comprising:

receiving, from the second device, dynamic status information related to the first device, based on that the connection is established; and

transmitting V2X message including the dynamic status information related to the first device.

14. The method of claim 1, further comprising:

transmitting, to the second device, information for outputting first user interface information, based on that at least one of the second message or the third message is received; and

transmitting, to the second device, information for outputting second user interface information, based on that the connection is established and at least one of the second message or the third message is received,

wherein the first user interface information includes at least one of voice information or vibration information, and

wherein the second user interface information includes display information.

15. The method of claim 14, further comprising:

wherein the display information includes information related to route plan of at least one device that transmitted the second message, and

receiving, from the second device, information related to agreement for the route plan.

16. The method of claim 1,
wherein validity check request information is transmitted to the second device, based on that the second message is received and distance between at least one device that transmits the second message and the first device is lower than or equal to second threshold, or based on that the second message is received and at least one of velocity of the least one device or acceleration of the least one device is greater than or equal to third threshold.

17. The method of claim 1, further comprising:

wherein first time when at least one of the second message or the third message is received and second time when validity check request information is transmitted is different from each other,

transmitting, to the second device, information related to the first time.

18. The method of claim 17,

wherein the first time is configured based on period, index related to the period, and offset related to the index.

19. A first device performing wireless communication, the first device comprising:

at least one memory storing instructions;

at least one transceiver; and

at least one processor connected to the at least one memory and the at least one transceiver, wherein the at least one processor is adapted to execute instructions to perform operations comprising:

transmitting a first message, based on that a connection between the first device and a second device is not established,

wherein a reception of at least one of a second message or a third message is skipped;

establishing the connection between the first device and the second device; and

receiving at least one of the second message or the third message, based on that the connection is established.

20. An apparatus configured to control a first device, the apparatus comprising:

at least one processor; and

at least one memory connected to the at least one processor and storing instructions that, based on being executed by the at least one processor, cause the at least one processor to perform operations comprising:

transmitting a first message, based on that a connection between the first device and a second device is not established,

wherein a reception of at least one of a second message or a third message is skipped;

establishing the connection between the first device and the second device; and

receiving at least one of the second message or the third message, based on that the connection is established.

21. A non-transitory computer-readable storage medium storing instructions that, based on being executed by at least one processor, cause the at least one processor to perform operations comprising:

transmitting a first message, based on that a connection between the first device and a second device is not established,

wherein a reception of at least one of a second message or a third message is skipped;

establishing the connection between the first device and the second device; and

receiving at least one of the second message or the third message, based on that the connection is established.

22. A method for performing wireless communication by a second device, the method comprising:

establishing a connection between a first device and the second device,

wherein the first message is transmitted, based on that the connection between the first device and the second device is not established,

wherein a reception of at least one of a second message or a third message is skipped, and

wherein at least one of the second message or the third message is received, based on that the connection is established.

23. A second device performing wireless communication, the second device comprising:

at least one memory storing instructions;

at least one transceiver; and

at least one processor connected to the at least one memory and the at least one transceiver, wherein the at least one processor is adapted to execute instructions to perform operations comprising:

establishing a connection between a first device and the second device,
wherein the first message is transmitted, based on that the connection between the first device and the second device is not established,
wherein a reception of at least one of a second message or a third message is skipped, and
wherein at least one of the second message or the third message is received, based on that the connection is established.

24. An apparatus configured to control a second device, the apparatus comprising:

at least one processor; and
at least one memory connected to the at least one processor and storing instructions that, based on being executed by the at least one processor, cause the at least one processor to perform operations comprising:

establishing a connection between a first device and the second device,
wherein the first message is transmitted, based on that the connection between the first device and the second device is not established,
wherein a reception of at least one of a second message or a third message is skipped, and
wherein at least one of the second message or the third message is received, based on that the connection is established.

25. A non-transitory computer-readable storage medium storing instructions that, based on being executed by at least one processor, cause the at least one processor to perform operations comprising:

establishing a connection between a first device and the second device,
wherein the first message is transmitted, based on that the connection between the first device and the second device is not established,
wherein a reception of at least one of a second message or a third message is skipped, and
wherein at least one of the second message or the third message is received, based on that the connection is established.

# FIG. 1

# FIG. 2

(a)

(b)

(c)

(d)

PC5-U

PC5-C

EP 4 415 398 A1

# FIG. 3

# FIG. 4

Resource grid

A carrier
(up to 3300 subcarriers, i.e., 275 RBs)

A BWP

1RB=12 subcarriers

1 RE

1 subcarrier

1 symbol

l=0 • • •

k=0

EP 4 415 398 A1

# FIG. 5

PRB N3

PRB 1

PRB 0

$N_{BWP, 2}^{size}$

PRB N2

PRB 1

PRB 0

$N_{BWP, 1}^{size}$

PRB N1

PRB 1

PRB 0

$N_{BWP, 0}^{size}$

CRB 0

Carrier Bandwidth

$N_{BWP, 2}^{start}$

$N_{BWP, 1}^{start}$

$N_{BWP, 0}^{start}$

Freq.

Time

PRB 0 (Point A) in reference resource block

# FIG. 6

(a)

(b)

# FIG. 7

(a)

(b)

(c)

●: TX UE

◯: RX UE

# FIG. 8

GNSS

direct synchronization
with GNSS
(In Coverage)

direct synchronization
with BS

direct synchronization
with GNSS
(Out Coverage)

BS

indirect synchronization
with BS

indirect synchronization
with GNSS

independent
synchronization source

EP 4 415 398 A1

FIG. 9

# FIG. 10

# FIG. 11

EP 4 415 398 A1

# FIG. 12

| NRPPa | | |
|---|---|---|
| NGAP | | |
| SCTP | | |
| IP | | |
| L2 | | |
| L1 | | |

NG RAN    NG-C

| NGAP | HTTP/2 |
|---|---|
| SCTP | TLS |
| | TCP |
| IP | IP |
| L2 | L2 |
| L1 | L1 |

AMF    NLs

| NRPPa |
|---|
| HTTP/2 |
| TLS |
| TCP |
| IP |
| L2 |
| L1 |

LMF

# FIG. 13

# FIG. 14

Other road users equipped with short-range communication devices

Base station

Paired via local communication interface

Long-range communication devices (e.g., cell phone)

Short-range communication devices (e.g., dedicated device)

# FIG. 15

Long-range communication device ←--- Paired ---→ Short-range communication device

**Long-range communication device**

- User interface
  (e.g., display, speaker, MIC, ...)
- Application processor
- Long-range communication module
- Local communication interface

**Short-range communication device**

- User interface
  (e.g., display, speaker, MIC, ...)
- Application processor
- Local communication interface
- Short-range communication module

Wireless (WiFi, Bluetooth, ...)
or wireline (USB cable, ...)

EP 4 415 398 A1

FIG. 16

# FIG. 17

# FIG. 18

EP 4 415 398 A1

# FIG. 19

EP 4 415 398 A1

# FIG. 20

Other road users equipped
with short-range
communication devices

V2X message

Short-range
communication
devices
(e.g., dedicated device)

EP 4 415 398 A1

# FIG. 21

Other road users equipped
with short-range
communication devices

V2X message

Base station

Paired via local
communication
interface

Long-range
communication
devices
(e.g., cell phone)

Short-range
communication
devices
(e.g., dedicated device)

Validity check &
Validity check request

Validity check &
Validity check request

EP 4 415 398 A1

# FIG. 22

Long-range communication device

Short-range communication device

device

Reception function off for V2X message — S2210

V2X message (first V2X message) — S2220

V2X message (second V2X message, third V2X message) — S2230

Connection request information — S2240

Connection is established? — S2250
- NO
- YES

reception function on for V2X message — S2260

V2X message (second V2X message, third V2X message) — S2232

Validity check request information for second V2X message — S2270

Validity check result for second V2X message — S2280

# FIG. 23

| |
|---|
| Transmitting a first message, based on that a connection between a first device and a second device is not established, wherein a reception of at least one of a second message or a third message is skipped |

~S2310

| |
|---|
| Establishing a connection between a first device and a second device |

~S2320

| |
|---|
| Receiving at least one of a second message or a third message, based on that a connection is established |

~S2330

# FIG. 24

| |
|---|
| Establishing a connection between a first device and the second device |

~S2410

# FIG. 25

EP 4 415 398 A1

# FIG. 26

EP 4 415 398 A1

# FIG. 27

1000(102/106, 202/206)

codewords

| 1010 | 1020 | 1030 | layers 1040 | 1050 | 1060 | antenna ports |

Scrambler → Modulator → Layer Mapper → Precoder → Resource Mapper → Signal Generator →

Scrambler → Modulator → Layer Mapper → Precoder → Resource Mapper → Signal Generator →

1010  1020  1050  1060

# FIG. 28

Device (100,200)

| Communication unit (110)<br>(e.g., 5G communication unit) | Control unit (120)<br>(e.g., processor(s)) |
| --- | --- |
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 29

# FIG. 30

**Car or autonomous vehicle (100)**
- Communication unit (110)
- Control unit (120)
- Memory unit (130)
- Driving unit (140a)
- Power supply unit (140b)
- Sensor unit (140c)
- Autonomous driving unit (140d)

108

**Device (100, 200)**
- Communication unit (210)
- Control unit (220)
- Memory unit (230)
- Driving unit (140a)
- Power supply unit (140b)
- Sensor unit (140c)
- Autonomous driving unit (140d)

208

**INTERNATIONAL SEARCH REPORT**

| | International application No. |
|---|---|
| | **PCT/KR2022/015065** |

**A. CLASSIFICATION OF SUBJECT MATTER**

**H04W 4/40**(2018.01)i; **H04W 4/80**(2018.01)i; **H04W 92/18**(2009.01)i; **H04W 4/029**(2018.01)i; **H04W 4/02**(2009.01)i; **H04W 4/024**(2018.01)i; **H04W 12/069**(2021.01)i

According to International Patent Classification (IPC) or to both national classification and IPC

**B. FIELDS SEARCHED**

Minimum documentation searched (classification system followed by classification symbols)

H04W 4/40(2018.01); G08G 1/0965(2006.01); G08G 1/0968(2006.01); H04L 29/06(2006.01); H04L 29/08(2006.01); H04W 4/02(2009.01); H04W 4/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: V2X(vehicle-to-everything), 연동 관계(linkage relationship), 확립(establish), 생략 (skip), 메시지(message), 유효성(validity)

**C. DOCUMENTS CONSIDERED TO BE RELEVANT**

| Category* | Citation of document, with indication, where appropriate, of the relevant passages | Relevant to claim No. |
|---|---|---|
| A | KR 10-2018-0101066 A (HYUNDAI MOTOR COMPANY) 12 September 2018 (2018-09-12)<br>See paragraphs [0065]-[0156]; and figures 2-8. | 1-25 |
| A | KR 10-2019-0109333 A (LG ELECTRONICS INC.) 25 September 2019 (2019-09-25)<br>See paragraphs [0027]-[0214]; and figures 1-14. | 1-25 |
| A | KR 10-2021-0063134 A (SAMSUNG ELECTRONICS CO., LTD.) 01 June 2021 (2021-06-01)<br>See paragraphs [0018]-[0157]; and figures 1-16. | 1-25 |
| A | US 2021-0281986 A1 (HUAWEI TECHNOLOGIES CO., LTD.) 09 September 2021 (2021-09-09)<br>See paragraphs [0072]-[0441]; and figures 1-14. | 1-25 |
| A | LG ELECTRONICS INC. Inter-UE coordination for NR V2X. R2-2104085, 3GPP TSG RAN WG2 Meeting #113bis-e. 02 April 2021.<br>See sections 1-2.7. | 1-25 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **12 January 2023** | **13 January 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/015065**

| Patent document cited in search report | | | Publication date (day/month/year) | Patent family member(s) | | | Publication date (day/month/year) |
|---|---|---|---|---|---|---|---|
| KR | 10-2018-0101066 | A | 12 September 2018 | CN | 108540957 | A | 14 September 2018 |
| | | | | DE | 102018104274 | A1 | 06 September 2018 |
| | | | | US | 10736126 | B2 | 04 August 2020 |
| | | | | US | 11323875 | B2 | 03 May 2022 |
| | | | | US | 11323876 | B2 | 03 May 2022 |
| | | | | US | 2018-0255562 | A1 | 06 September 2018 |
| | | | | US | 2020-0329376 | A1 | 15 October 2020 |
| | | | | US | 2020-0336905 | A1 | 22 October 2020 |
| KR | 10-2019-0109333 | A | 25 September 2019 | US | 2020-0045517 | A1 | 06 February 2020 |
| KR | 10-2021-0063134 | A | 01 June 2021 | EP | 4032079 | A1 | 27 July 2022 |
| | | | | US | 2021-0158701 | A1 | 27 May 2021 |
| | | | | WO | 2021-101054 | A1 | 27 May 2021 |
| US | 2021-0281986 | A1 | 09 September 2021 | CN | 111200799 | A | 26 May 2020 |
| | | | | CN | 111200799 | B | 15 June 2021 |
| | | | | EP | 3869841 | A1 | 25 August 2021 |
| | | | | WO | 2020-103524 | A1 | 28 May 2020 |

Form PCT/ISA/210 (patent family annex) (July 2022)